# EUROPEAN PATENT APPLICATION

(11) **EP 4 404 407 A1**
(43) Date of publication of application: **24.07.2024**
(21) Application number: 23160078.4
(22) Date of filing: 04.03.2023
(51) Int. Cl.: H02J 3/00, H02J 13/00

(54) **DATA PROCESSING SYSTEM AND DATA PROCESSING METHOD FOR A SUBSTATION SYSTEM, AND ELECTRIC POWER SYSTEM SUBSTATION**

(30) Priority: 20.01.2023 IN 202341004050
(71) Applicant: Hitachi Energy Ltd, 8050 Zürich (CH)
(72) Inventor: Pradhan, Vedanta, 751024 Bhubaneswar (IN); Naidu, Obbalareddi Demudu, 560087 Bangalore (IN)
(74) Representative: Meier, Florian

(57) **Abstract**

A data processing system (20) and data processing method for a substation system are provided, wherein the substation system comprises a primary system and a secondary system. Data acquired or generated by the secondary system are received and processed by the data processing system to perform a state assessment based on at least one digital twin (31). The data processing system executes at least one function (32) that performs a check of or supports the state assessment. Redundant information included in the received data may be used to perform the check.

## Description

### TECHNICAL FIELD

Embodiments of the invention relate to systems and methods operative to process measurements acquired in a substation system. Embodiments of the invention relate in particular to such data processing systems and methods which are operative to detect abnormalities and/or faults in a substation system.

### BACKGROUND

Electric power systems are important infrastructure components. Electric power systems, such as power generation, transmission, and/or a distribution systems, comprise electric power system components in a primary system.

Modern power systems employ protection systems to operate the electric power system components. Intelligent electronic devices (lEDs) are an implementation of protection devices of such protection systems.

Conventional substation protection systems are based on techniques in which the protection logic or settings of the protection logic are specified by a human expert. Such conventional approaches require many settings to be made and are prone to erroneous operation under incorrect parameterization. Conventional protection systems may be challenged by certain scenarios such as high impedance faults, incipient faults, and other transient phenomena which may look like faults, etc.

Many conventional protection systems have protection logics designed for conventional power generation, transmission, and/or distribution systems. While such protection logics can be used for fault or abnormality detection when there is a certain degree of renewable penetration, the increased deployment of resources (such as renewables and battery energy storage systems) interfaced with power electronic converters can modify fault characteristics of a grid. This makes fault or abnormality detection more challenging.

Conventional protection systems may also be prone to not reacting adequately to so-called "unseen errors" in a data acquisition system. Conventional protection systems do not provide safeguards against such unseen errors-phenomena in a protection timescale which may be as short as a few milliseconds after an event.

### SUMMARY

It is an object of the invention to provide devices, systems and methods that provide enhanced techniques of detecting abnormalities and/or faults. It is also an object of the invention to provide devices, systems and methods that address one or more of the above-described challenges. In view of the above, it is desirable to provide systems and methods that can be used to complement existing protection and/or monitoring systems with devices capable of reducing possible errors made by a human engineer during protection system configuration and/or commissioning. It is also desirable to provide systems and methods that can be used to complement existing protection and/or monitoring systems in such a manner that fault or abnormality detection is enhanced in view of higher penetration of renewables, incorrect instrumentation, or other unseen errors in the data acquisition systems.

According to the invention, a data processing system and method as recited in the independent claims are provided. The dependent claims define preferred embodiments.

According to an aspect of the invention, there is provided a data processing system for a substation system, wherein the substation system comprises a primary system and a secondary system, the primary system comprising a plurality of primary system components. The data processing system comprises at least one interface operative to receive data acquired or generated by the secondary system and relating to the primary system. The data processing system further comprises at least one processing circuit operative to perform, continually and during field operation of the primary system, a state assessment of at least one primary system component of the plurality of primary system components or of the primary system of the substation system (140) based on the received data and at least one digital twin. The at least one processing circuit is further operative to execute at least one function that performs a check of or supports the state assessment based on one or several of: redundant information included in the received data, domain knowledge data, and/or a trained machine learning (ML) model.

Various effects and advantages are attained by the data processing system. The data processing system may be implemented as an additional component separate from but interfaced with intelligent electronic devices (lEDs) of the substation. Thereby, enhanced reliability is provided. The data processing system is operative to complement protection and/or monitoring that may be implemented in lEDs.

The data processing system uses at least one digital twin. In addition, a function uses redundant information included in the received data (such as redundant measurements), domain knowledge and/or a trained ML model to further enhance the state assessment that is based on the at least one digital twin. Thereby, additionally reliability is attained to detect abnormalities and/or faults.

The data processing system may be operative for perform an action, such as an output action and/or of a control action, based on an output of the at least one function and the state assessment. The action may comprise generating an alarm or warning. Alternatively or additionally, the action may comprise selectively overriding a decision of a logic (e.g., of a protection logic) of an lED.

The data processing system may be a centralized data processing system of the substation.

This allows improved decisions on abnormalities and/or faults to be taken based on a centralized approach which integrates various measurements acquired or generated within the substation.

The data processing system may be a centralized data processing system of an electric power system substation, such as a substation of a power grid or other power generation, transmission, and/distribution system.

Thereby, improved detection of faults and/or abnormalities is provided in the electric power domain, where undetected faults and/or abnormalities could have potentially catastrophic effects.

The at least one digital twin may comprise a plurality of first digital twins. Each of the plurality of first digital twins may model an associated one of the plurality of primary system components.

Thereby, component-level fault and/or abnormality detection is facilitated. Such first digital twins, each of which is associated with a single one of the plurality of primary system components only, can be implemented using a model tailored for the respective component. The component-level approach also requires limited measurements associated with the respective primary system component.

The plurality of first digital twins may comprise at least two first digital twins that both model the same primary system component.

Thereby, several model-based state assessments may be run parallel for the same primary system component.

The at least one function may check the outputs of the at least two first digital twins that both model the same primary system component.

Thereby, resolution of potentially conflicting findings may be performed using redundant measurements, domain knowledge, and/or a trained ML model.

The first digital twins may be operative to perform electric modeling. At least some of the first digital twins may be operative to model thermal and/or mechanical characteristics of a component of the primary system.

Thereby, not only electric but also thermoelectric, thermal, and/or mechanical abnormalities or faults can be identified.

The first digital twins may comprise first digital twins operative to model one, several, or all of: switchgear (such as a circuit breaker or power switch), a transformer, a generator, a converter (such as AC/DC, DC/AC, and/or DC/DC converter), an energy storage system (such as a battery storage system or a flywheel energy storage system), without being limited thereto. Distinct models tailored to the respective primary system component may be used.

Thereby, component-level models may be implemented for the primary system components of the substation.

The at least one function may comprise a plurality of first component-level functions.

Thereby, each of first digital twin may be supplemented with a supervisory or auxiliary function that checks or supplements the state assessment based on, e.g., redundant measurements, domain knowledge, or the trained ML model. Such component-level functions can be implemented using limited measurements from the substation data acquisition system, facilitating their implementation.

Each of the first component-level functions may be operative to cause, based on the check, an adjustment of a process executed by a first digital twin to perform the state assessment and/or to supervise the state assessment based on domain knowledge and/or a trained ML model.

Thereby, the state assessment technique is improved, based on the redundant measurements, domain knowledge, and/or the trained ML model.

The adjustment may comprise discarding part of the data used in the state assessment as being unreliable when performing the state assessment.

Thereby, the at least one function may be operative to improve the reliability of the state assessment that is performed based on the first, component-level digital twin.

The first component-level functions may be operative to supervise decisions taken by an lED associated with the respective component.

The first component-level functions may be operative to perform their supervisory and/or assist functionality using only a subset of the received data, in particular only a subset of the available measurements. Thereby, a simple implementation is attained. The first component-level functions may be operative to perform their supervisory and/or assist functionality based on measurements acquired or generated at or in proximity of the respective component of the primary system.

The at least one digital twin may comprise a second digital twin that models at least the primary system of the substation.

Thereby, modeling at the substation level may be implemented, optionally in addition to component-level modeling. This allows abnormality and/or fault detection to be performed in a more reliable manner.

While modeling at the substation level is more complex than modeling at component level, it provides further enhanced reliability in identifying abnormalities and/or faults.

The second digital twin may be operative to receive output generated by the plurality of first digital twins.

Thereby, modeling at the substation level may be combined with component-level modeling. Abnormality and/or fault detection can be performed in a more reliable manner.

The second digital twin may be operative to receive and process redundant information included in the data.

Thereby, the protection system may take advantage of the redundant measurement instrumentation that is typically deployed in a substation.

The secondary system may comprise a first measurement device and a second measurement device that both are operative to measure the same electric characteristic. The at least one function may be operative to process both a first measurement acquired or generated by the first measurement device and a second measurement acquired or generated by the second measurement device to supervise the second digital twin.

Thereby, the protection system may take advantage of the redundant measurement instrumentation that is typically deployed in a substation to supervise an abnormality and/or a fault detection that is based on the at least one digital twin.

The redundant information may comprise redundant measurements. Alternatively or additionally, the redundant information may comprise at least two measurements of a same substation parameter acquired or generated by different measurement instruments of the secondary system.

Thereby, the protection system may take advantage of the redundant measurement instrumentation that is typically deployed in a substation. This is useful to supervise a detection of an abnormality and/or a fault based on the at least one digital twin.

The at least one processing circuit may be operative to perform, based on the second digital twin, a substation state assessment.

Thereby, component-level modeling may be enhanced by a substation-level modeling.

The substation state assessment may comprise assessing whether the substation is healthy, has an abnormality (such as an incipient fault), or has a fault.

The at least one digital twin may comprise a third digital twin that models at least the secondary system.

Thereby, the identification of errors in the data acquisition system, i.e. the secondary system, is facilitated.

The at least one function may be operative to identify instrumentation errors, based on, e.g., the expert knowledge, plausibility checks, or other processing, and optionally based on the third digital twin. Instrumentation errors can be detected.

The at least one processing circuit may be operative to identify, based on the check, instrumentation errors in the secondary system.

Thereby, abnormalities and/or faults in the primary system can be distinguished more easily from incorrect instrumentation.

The identified instrumentation error may comprise incorrect instrumentation settings, such as incorrect winding ratios set for at least one current transformer. The incorrect instrumentation settings may comprise instrumentation settings of at least one lED.

The processing circuit may be operative to identify, based on the check, a root cause for a discrepancy between the data and the at least one digital twin.

Thereby, the reliability of abnormality and/or fault detection is further improved. Abnormalities and/or faults in the primary system can be distinguished from abnormalities and/or or faults in the secondary system, for example. Improved corrective and/or mitigating actions can be taken, depending on the identified root cause.

The at least one processing circuit may be operative to distinguish, based at least on the redundant information, root causes selected from a group consisting of: an abnormality of at least one primary system component of the primary system; unsuitability of a model or model parameterization of the at least one digital twin; an abnormality of a measurement instrumentation.

Thereby, the reliability of abnormality and/or fault detection is further improved. Abnormalities and/or faults in the primary system can be distinguished from abnormalities and/or or faults in the secondary system, for example. Improved corrective and/or mitigating actions can be taken, depending on the identified root cause.

The at least one interface may be operative to receive an lED logic output from at least one lED of the substation.

Thereby, the data processing system can be interfaced with one or several lEDs deployed in the substation. The data processing system can be operative to complement the decision making and analysis performed using legacy techniques in lEDs.

The at least one processing circuit may be operative to check the lED logic output based on the at least one digital twin and the received data.

Thereby, the at least one function may be used to check decisions taken by the IEDs, using inter alia the at least one digital twin.

The at least one interface may be operative to receive auxiliary data indicative of data issues. The at least one processing circuit may be operative to process the auxiliary data indicative of data issues.

Thereby, less reliable data can be identified and potentially discarded when performing the state assessment are in checking the state assessment by the at least one function.

The at least one processing circuit may be operative to trigger at least one action based on the check.

Thereby, the data processing system can take appropriate action based on the information available to it, including redundant measurements, expert knowledge data, and/or the trained ML model.

The at least one action may comprise one or several of an output action via a human machine interface (HMI), a corrective action, and/or a mitigating action.

Thereby, the results of the data processing system are operative to automatically implement the outputting of an alarm of warning or other information via an HMI, and/or for automatic corrective and/or mitigating actions.

The at least one action may comprise selectively overriding, based on the state assessment and the output of the at least one function, a decision taken by an lED of the substation.

Thereby, the results of the data processing system are operative to complement the operation of the lEDs of the substation.

The at least one action may comprise a corrective or mitigating action that affects an electric power system protection function and/or an electric power system monitoring function.

Thereby, the results of the data processing system are operative to enhance the reliability of abnormality and/or fault detection in an electric power system substation.

The data processing system may be a data processing system operative to be installed in a substation.

Thereby, the functions of the data processing system may be implemented locally at the substation, avoiding potentially adverse effects that may be associated with data transmission delays over data transmission pathways that traverse multiple communication nodes.

The data processing system may be a data processing system operative to be installed locally at the substation. The data processing system may be a data processing system operative to be installed remotely from a regional or national control center.

Thereby, the functions of the data processing system may be implemented locally at the substation, avoiding potentially adverse effects that may be associated with data transmission delays over data transmission pathways that traverse multiple communication nodes. The execution of control functions, such as mitigating functions, is thereby facilitated, in particular for time-critical functions.

The data processing system does not need to be provided in the substation but may be provided remotely therefrom. For illustration, the data processing system may be provided in a control center when operative to perform monitoring functions.

According to another aspect of the invention, there is provided an electric power system substation that comprises a primary system comprising a plurality of primary system components, a secondary system operative to acquire data relating to the primary system, and the data processing system of any aspect or embodiment, which is operative to receive and process the acquired or generated data.

Such an electric power system substation provides improved reliability. The data processing system implements enhanced, non-legacy techniques to augment abnormality and/or fault detection.

According to another aspect of the invention, there is provided an electric power system (such as an electric power grid) which comprises the electric power system substation according to an embodiment.

Such an electric power system provides improved reliability. The data processing system implements enhanced, non-legacy techniques to augment abnormality and/or fault detection.

The electric power system substation of the electric power system may further comprise a plurality of IEDs which are interfaced with the data processing system.

Thereby, the data processing system is operative to augment and enhance the decisions taken by the plurality of lEDs.

The electric power system substation or the electric power system may comprise at least one converter and a component interfaced with the converter. The component may comprise a renewable energy source.

Thereby, the effects and advantages of the data processing system are utilized in a context in which legacy protection techniques may be particularly prone to taking incorrect decisions in view of the renewables penetration.

According to another aspect of the invention, there is provided a use of the data processing system according to any aspect or embodiment disclosed herein for checking abnormality and/or fault detection in an electric power system substation have.

Thereby, the data processing system provides enhanced reliability in detecting abnormalities and/or faults in an electric power system substation.

According to another aspect of the invention, there is provided a data processing method for a substation system, wherein the substation system comprises a primary system and a secondary system, the primary system comprising a plurality of primary system components. The data processing method comprises receiving data acquired or generated by the secondary system and relating to the primary system, and performing, continually and during field operation of the primary system, a state assessment of at least one primary system component of the plurality of primary system components or of the primary system of the substation system (140) based on the received data and at least one digital twin, and executing at least one function that performs a check of the state assessment based on at least one of: redundant information included in the received data, domain knowledge, and/or a trained machine learning (ML) model.

The method may be performed by the data processing system according to an embodiment.

The steps of performing the state assessment and executing the at least one function may be performed by a processing circuit. The processing circuit may comprise one or several integrated circuits.

Optional features of the method and the effects attained thereby correspond to the features described in greater detail with reference to the data processing system.

Various effects and advantages are attained by the data processing method. The data processing method may be performed in addition to the decision logic processing implemented in intelligent electronic devices (lEDs) of the substation. Thereby, enhanced reliability is provided. The data processing method is operative to complement protection and/or monitoring that may be implemented in lEDs.

The data processing method uses at least one digital twin. In addition, a function uses redundant information included in the received data (such as redundant measurements), domain knowledge and/or a trained ML model to further enhance the state assessment that is based on the at least one digital twin. Thereby, additionally reliability is attained to detect abnormalities and/or faults.

The method may further comprise performing an action, such as an output action and/or a control action, based on an output of the at least one function and the state assessment. The action may comprise generating an alarm or warning. Alternatively or additionally, the action may comprise selectively overriding a decision of a logic (e.g., of a protection logic) of an lED.

The processing may be performed by a data processing system that may be a centralized data processing system of the substation.

This allows improved decisions on abnormalities and/or faults to be taken based on a centralized approach which integrates various measurements acquired or generated within the substation.

The processing may be performed by a data processing system that may be a centralized data processing system of an electric power system substation, such as a substation of a power grid or other power generation, transmission, and/distribution system.

Thereby, improved detection of faults and/or abnormalities is provided in the electric power domain, where undetected faults and/or abnormalities could have potentially catastrophic effects.

The at least one digital twin may comprise a plurality of first digital twins. Each of the plurality of first digital twins may model an associated one of the plurality of primary system components.

Thereby, component-level fault and/or abnormality detection is facilitated. Such first digital twins, each of which is associated with a single one of the plurality of primary system components only, can be implemented using a model tailored for the respective component. The component-level approach also requires limited measurements associated with the respective primary system component.

The plurality of first digital twins may comprise at least two first digital twins that both model the same primary system component.

Thereby, several model-based state assessments may be run parallel for the same primary system component.

The at least one function may check the outputs of the at least two first digital twins that both model the same primary system component.

Thereby, resolution of potentially conflicting findings may be performed using redundant measurements, domain knowledge, and/or a trained ML model.

The first digital twins may perform electric modeling. At least some of the first digital twins may be model thermal and/or mechanical characteristics of a component of the primary system.

Thereby, not only electric but also thermoelectric, thermal, and/or mechanical abnormalities or faults can be identified.

The first digital twins may comprise first digital twins that model one, several, or all of: switchgear (such as a circuit breaker or power switch), a transformer, a generator, a converter (such as AC/DC, DC/AC, and/or DC/DC converter), an energy storage system (such as a battery storage system or a flywheel energy storage system), without being limited thereto. Distinct models tailored to the respective primary system component may be used.

Thereby, component-level models may be implemented for the primary system components of the substation.

The at least one function may comprise a plurality of first component-level functions.

Thereby, each of first digital twin may be supplemented with a supervisory or auxiliary function that checks or supplements the state assessment based on, e.g., redundant measurements, domain knowledge, or the trained ML model. Such component-level functions can be implemented using limited measurements from the substation data acquisition system, facilitating their implementation.

Each of the first component-level functions may cause, based on the check, an adjustment of a process executed by a first digital twin to perform the state assessment and/or to supervise the state assessment based on domain knowledge and/or a trained ML model.

Thereby, the state assessment technique is improved, based on the redundant measurements, domain knowledge, and/or the trained ML model.

The adjustment may comprise discarding part of the data used in the state assessment as being unreliable when performing the state assessment.

Thereby, the at least one function may be operative to improve the reliability of the state assessment that is performed based on the first, component-level digital twin.

The first component-level functions may supervise decisions taken by an lED associated with the respective component.

The first component-level functions may perform their supervisory and/or assist functionality using only a subset of the received data, in particular only a subset of the available measurements. Thereby, a simple implementation is attained. The first component-level functions may perform their supervisory and/or assist functionality based on measurements acquired or generated at or in proximity of the respective component of the primary system.

The at least one digital twin may comprise a second digital twin that models at least the primary system of the substation.

Thereby, modeling at the substation level may be implemented, optionally in addition to component-level modeling. This allows abnormality and/or fault detection to be performed in a more reliable manner.

While modeling at the substation level is more complex than modeling at component level, it provides further enhanced reliability in identifying abnormalities and/or faults.

The second digital twin may receive output generated by the plurality of first digital twins.

Thereby, modeling at the substation level may be combined with component-level modeling. Abnormality and/or fault detection can be performed in a more reliable manner.

The second digital twin may receive and process redundant information included in the data.

Thereby, the protection system may take advantage of the redundant measurement instrumentation that is typically deployed in a substation.

The secondary system may comprise a first measurement device and a second measurement device that both are operative to measure the same electric characteristic. The at least one function may process both a first measurement acquired or generated by the first measurement device and a second measurement acquired or generated by the second measurement device to supervise the second digital twin.

Thereby, the protection method may take advantage of the redundant measurement instrumentation that is typically deployed in a substation to supervise an abnormality and/or a fault detection that is based on the at least one digital twin.

The redundant information may comprise redundant measurements. Alternatively or additionally, the redundant information may comprise at least two measurements of a same substation parameter acquired or generated by different measurement instruments of the secondary system.

Thereby, the protection method may take advantage of the redundant measurement instrumentation that is typically deployed in a substation. This is useful to supervise a detection of an abnormality and/or a fault based on the at least one digital twin.

The data processing method may perform, based on the second digital twin, a substation state assessment.

Thereby, component-level modeling may be enhanced by a substation-level modeling.

The substation state assessment may comprise assessing whether the substation is healthy, has an abnormality (such as an incipient fault), or has a fault.

The at least one digital twin may comprise a third digital twin that models at least the secondary system.

Thereby, the identification of errors in the data acquisition system, i.e. the secondary system, is facilitated.

The at least one function may identify instrumentation errors, based on, e.g., the expert knowledge, plausibility checks, or other processing, and optionally based on the third digital twin. Instrumentation errors can be detected.

The data processing method may identify, based on the check, instrumentation errors in the secondary system.

Thereby, abnormalities and/or faults in the primary system can be distinguished more easily from incorrect instrumentation.

The identified instrumentation error may comprise incorrect instrumentation settings, such as incorrect winding ratios set for at least one current transformer. The incorrect instrumentation settings may comprise instrumentation settings of at least one lED.

The data processing method may comprise identifying, based on the check, a root cause for a discrepancy between the data and the at least one digital twin.

Thereby, the reliability of abnormality and/or fault detection is further improved. Abnormalities and/or faults in the primary system can be distinguished from abnormalities and/or or faults in the secondary system, for example. Improved corrective and/or mitigating actions can be taken, depending on the identified root cause.

The data processing method may comprise distinguishing, based at least on the redundant information, root causes selected from a group consisting of: an abnormality of at least one primary system component of the primary system; unsuitability of a model or model parameterization of the at least one digital twin; an abnormality of a measurement instrumentation.

Thereby, the reliability of abnormality and/or fault detection is further improved. Abnormalities and/or faults in the primary system can be distinguished from abnormalities and/or or faults in the secondary system, for example. Improved corrective and/or mitigating actions can be taken, depending on the identified root cause.

The at least one interface may receive an lED logic output from at least one lED of the substation.

Thereby, the data processing method can provide an interaction of a substation-level data processing system that interacts with one or several lEDs deployed in the substation. The substation-level data processing system can be operative to complement the decision making and analysis performed using legacy techniques in IEDs.

The method may comprise checking the lED logic output based on the at least one digital twin and the received data.

Thereby, the at least one function may be used to check decisions taken by the IEDs, using inter alia the at least one digital twin.

The at least one interface may receive auxiliary data indicative of data issues. The data processing method may comprise processing the auxiliary data indicative of data issues.

Thereby, less reliable data can be identified and potentially discarded when performing the state assessment are in checking the state assessment by the at least one function.

The data processing method may comprise triggering at least one action based on the check.

Thereby, appropriate action is taken based on the information available to the data processing system, including redundant measurements, expert knowledge data, and/or the trained ML model.

The at least one action may comprise one or several of an output action via a human machine interface (HMI), a corrective action, and/or a mitigating action.

Thereby, the results of the processing automatically cause the outputting of an alarm of warning or other information via an HMI, and/or for automatic corrective and/or mitigating actions.

The at least one action may comprise selectively overriding, based on the state assessment and the output of the at least one function, a decision taken by an lED of the substation.

Thereby, the results of the data processing system are operative to complement the operation of the lEDs of the substation.

The at least one action may comprise a corrective or mitigating action that affects an electric power system protection function and/or an electric power system monitoring function.

Thereby, the results of the data processing system are operative to enhance the reliability of abnormality and/or fault detection in an electric power system substation.

The data processing method may be performed by a data processing system installed in a substation.

Thereby, the centralized processing may be implemented locally at the substation, avoiding potentially adverse effects that may be associated with data transmission delays over data transmission pathways that traverse multiple communication nodes.

The data processing method may be performed by a data processing system installed locally at the substation and remotely from a regional or national control center.

Thereby, the functions of the data processing system may be implemented locally at the substation, avoiding potentially adverse effects that may be associated with data transmission delays over data transmission pathways that traverse multiple communication nodes.

According to another aspect of the invention, there is provided a method of operating an electric power system substation that comprises a primary system comprising a plurality of primary system components, a secondary system operative to acquire data relating to the primary system, which comprises processing the acquired or generated data using the processing technique of any aspect or embodiment disclosed herein.

Such an operation method provides improved reliability. The processing implements enhanced, non-legacy techniques to augment abnormality and/or fault detection.

According to another aspect of the invention, there is provided a method of operating an electric power system (such as an electric power grid) which comprises processing acquired or generated data using the processing technique of any aspect or embodiment disclosed herein.

Such an operation method provides improved reliability. The operation method implements enhanced, non-legacy techniques to augment abnormality and/or fault detection.

The electric power system substation of the electric power system may further comprise a plurality of IEDs which are interfaced with the data processing system. The operation method may comprise augmenting, based on the data processing method according to an aspect or embodiment, the decisions taken by the plurality of lEDs.

The operation method may be performed for an electric power system substation or electric power system that may comprise at least one converter and a component interfaced with the converter. The component may comprise a renewable energy source.

Thereby, the effects and advantages of the data processing system are utilized in a context in which legacy protection techniques may be particularly prone to taking incorrect decisions in view of the renewables penetration.

According to further embodiments, there is provided machine-readable instruction code which, when executed by at least one programmable circuit, causes the programmable circuit to perform the method according to an embodiment.

According to further embodiments, there is provided a non-transitory storage medium having stored thereon machine-readable instruction code which, when executed by at least one programmable circuit, causes the programmable circuit to perform the method according to an embodiment.

Various effects and advantages are attained by embodiments of the invention. For illustration, the systems and methods according to embodiments provide enhanced techniques of detecting abnormalities and/or faults in a substation of, e.g., an electric power system. The systems and methods can be used to complement existing protection and/or monitoring systems with devices capable of reducing possible errors made by a human engineer during protection system configuration and/or commissioning. The systems and methods can be used to complement existing protection and/or monitoring systems in such a manner that fault or abnormality detection is enhanced in view of higher penetration of renewables, incorrect instrumentation, or other unseen errors in the data acquisition systems.

The systems and methods can be used in association with an electric power system (such as an electric power grid), without being limited thereto. The systems and methods can be used in association with an electric power system (such as an electric power grid) having renewable energy sources and/or battery-based or mechanical energy storage systems, without being limited thereto.

### BRIEF DESCRIPTION OF THE DRAWINGS

Embodiments of the invention will be described with reference to the drawings in which similar or identical reference signs designate elements with similar or identical configuration and/or function.
Figure 1 is a block diagram of a data processing system for a substation.
Figure 2 is a block diagram of components of a substation.
Figure 3 is a block diagram of components of a substation.
Figure 4 is a flow chart of a data processing method.
Figure 5 is a block diagram of a processing circuit of the data processing system.
Figure 6 is a block diagram of another processing circuit of the data processing system.
Figure 7 is a block diagram of another processing circuit of the data processing system.
Figure 8 is a block diagram of another processing circuit of the data processing system.
Figure 9 is a block diagram of functional blocks of the processing circuit of Figures 5 to 8.
Figure 10 is a block diagram of functional blocks of the processing circuit of Figures 5 to 8.
Figure 11 is a block diagram of functional blocks of the processing circuit of Figures 5 to 8.
Figure 12 shows a substation comprising a data processing system according to an embodiment.
Figure 13 shows a substation comprising a data processing system according to an embodiment.
Figure 14 shows part of an electric power system comprising several data processing systems according to embodiments.
Figure 15 is a flow chart of a data processing method.
Figure 16 is a flow chart of a data processing method.
Figure 17 is a flow chart of a data processing method.
Figure 18 is a flow chart of a data processing method.
Figure 19 is a block diagram of functional data processing modules of a data processing system.
Figure 20 illustrates fit errors identified using a data processing system and method according to embodiments.
Figure 21 illustrates a decisions logic output of a legacy lED for a same fault as in Figure 20.
Figure 22 illustrates a current transformer output.
Figure 23 illustrates fit errors identified using a data processing system and method according to embodiments for the current transformer output of Figure 22.
Figure 24 is a flow chart of a data processing method.
Figures 25 and 26 illustrate fit errors identified using a data processing system and method according to embodiments that allow a root cause analysis to be performed.
Figure 27 illustrates residual analysis results obtained using a data processing system and method according to embodiments that allow a root cause analysis to be performed.
Figure 28 illustrates fit errors identified using a data processing system and method according to embodiments that allow a root cause analysis to be performed.
Figure 29 illustrates residual analysis results obtained using a data processing system and method according to embodiments that allow a root cause analysis to be performed.
Figures 30 and 31 illustrate fit errors identified using a data processing system and method according to embodiments that allow a root cause analysis to be performed.
Figures 32 to 34 illustrate residual analysis results obtained using a data processing system and method according to embodiments that allow a root cause analysis to be performed.
Figure 35 is a flow chart of a data processing method.
Figures 36 to 338 illustrate fit errors identified using a data processing system and method according to embodiments that allow a root cause analysis to be performed.
Figures 39 and 40 illustrate residual analysis results obtained using a data processing system and method according to embodiments that allow a root cause analysis to be performed.

### DETAILED DESCRIPTION OF EMBODIMENTS

Embodiments of the invention will be described with reference to the drawings. In the drawings, similar or identical reference signs designate elements with similar or identical configuration and/or function.

While embodiments will be described in association with data processing systems and methods associated with electric power system substations, the embodiments are not limited thereto.

The features of embodiments may be combined with each other unless specifically stated otherwise.

According to the invention, data processing systems and methods are provided which provide a state assessment that is based on modeling of a primary system component or of a primary system of a substation. The data processing systems and methods further provide at least one function which uses the output of the modeling in combination with additional information. The at least one function may comprise a supervisory function that checks or otherwise verifies a state assessment that is based on the at least one digital twin. Alternatively or additionally, the at least one function may comprise an assist function that is operative to assist the state assessment performed using the at least one digital twin. The additional information may be or may comprise redundant measurements or other redundant data (such as redundant event data), domain knowledge data (which may be or may comprise a configuration description of the substation system such as a substation configuration description (SCD) file), and/or other data-driven techniques such as a trained ML model.

In accordance with conventional terminology in the art of industrial automation and control systems (IACSs), a primary system of a substation comprises those components that perform the functions for which the substation is intended to operate in the system in which it is provided. For illustration, the primary system may be made up of those components that carry the high electric powers of electric power generation, transmission, and/or distribution systems (of, e.g., a high, medium, or low voltage grid), when the substation is an electric power system substation. For substations of a utility grid that transfers a fluid (such as fresh or used water), the primary system may be made up of those components that pass the fluid.

Primary system components are the components of the primary system. For an electric power system substation, the primary system components comprise those components that pass the high electric powers encountered in electric power generation, transmission, and/or distribution systems (of, e.g., a high, medium, or low voltage grid). Examples of such primary system components comprise, without limitation, circuit breakers, switches (such as disconnectors and grounding switches), power transformers, instrument transformers, and generators.

In accordance with conventional terminology in the art of IACS, the secondary system of a substation comprises or is made up of measurement instrumentation and the associated data acquisition system. The secondary system may optionally comprise equipment that controls, regulates, protects, and monitors primary equipment. The secondary equipment and its interconnected electrical circuits is collectively referred to as a secondary system. The secondary system is operative to provide safety and reliability by, e.g., performing control and monitoring functions. The secondary system may comprise secondary equipment such as protection relays, reclosers, sensors, fault recorders, and control switches, without being limited thereto.

According to non-limiting embodiments, the data processing systems and methods use one or several digital twins. The term "digital twin" refers to a digital representation, a digital model, or a digital "shadow" corresponding to a digital informational construct about a physical device or system (such as a primary system component, the primary system, or the primary and secondary systems of the substation). That is, digital information can be implemented as a "twin" of a physical device or system (e.g., primary system components, etc.) and information associated with and/or embedded within the primary system components.

The digital twin may be linked with the primary system components, optionally with secondary system components, through the lifecycle of the primary system components. In certain examples, the digital twin may include a physical object in real space, a digital twin of that physical object that exists in a virtual space, and information linking the physical object with its digital twin. The digital twin may exist in a virtual space corresponding to a real space and may include a link for data flow from real space to virtual space as well as a link for information flow from virtual space to real space and virtual sub-spaces. The links for data flow or information flow may correspond to a digital thread that represents a communication framework between sources of data and the digital twin model. The digital thread can enable an integrated view of asset data throughout a lifecycle of the asset. For example, the digital twin can correspond to the virtual model of the asset and the digital thread can represent the connected data flow between an asset data source and the virtual model.

According to non-limiting embodiments, the data processing system and data processing method are operative to perform hierarchical monitoring, protection and supervision of an electrical substation. The electrical substation comprises components such as transformers, transmission lines, buses, capacitor banks, reactors, surge arrestors, etc. connected electrically with each other. The data processing system and data processing method may use individual modules at component level and a substation-level module at the substation level which work cohesively to monitor each and every apparatus for internal abnormalities.

According to non-limiting embodiments, the data processing system and data processing method may be operative to mitigate the risk of occurrence of false triggers due to hidden failures in the secondary (data acquisition) systems based on measurement redundancy at the substation level.

According to non-limiting embodiments, several digital twins and several supervisory or assist functions may be provided in the data processing system or data processing method. For illustration, data processing systems and methods according to non-limiting embodiments may utilize several first digital twins that each model an associated primary system component of a primary system of a substation, and at least one second digital twin that models the primary system of the substation. The at least one function may comprise a first plurality of first assist functions that each assist the state assessment that is based on one of the first digital twins. The at least one function may comprise a supervisory function that checks the state assessment that is performed based on the first digital twins and/or the at least one second digital twin.

The data processing system and data processing method may be operative to use a model-driven approach to monitor each component based on measurements relating to that component (such as terminal measurements), while supervising the component-level decisions at the substation level by a further model-driven approach to mitigate issues related to data errors. The effects of such a data processing system and data processing method are two-fold. Firstly, a model-driven approach can complement the threshold/settings based protection philosophies of legacy decision logics and provides additional intelligence to the protection/monitoring of the substation. Secondly, if implemented in a hierarchical manner, the hierarchical processing at the component level and the substation level provides enhanced robustness against unseen errors in the instrumentation which might otherwise trigger false operations, such as relay operations. Such a data processing system and data processing method can also help maintain validated models of substation apparatus and calibrate the instrumentation during field operation, e.g. on a regular basis, while providing monitoring and protection functionalities.

While embodiments that use modeling and processing both at the component level and at the substation level are described in association with the drawings, the data processing system and data processing method disclosed herein may beneficially also utilize component-level modeling in association with a function (such as a supervisory function or an assist function) that checks or supports a state assessment attained by the component-level modeling. It is beneficial but may not always be required to combine the component-level modeling with a substation-level modeling and/or a supervisory function that operates at the substation level.

As used herein, the term digital twin refers to a model or a model-based technique that models at least one characteristic of at least one component of a primary system of a substation (as will be described for the first and second digital twins) or that models measurement instrumentation (as will be described for the third digital twin, if present). The digital twin may model electric characteristics if the substation is a substation of an electric power system, such as an electric power grid. The digital twin may additionally model thermal and/or mechanical characteristics of the component. The digital twin may additionally or alternatively model characteristics other than electric, thermal, and mechanical characteristics, such as chemical characteristics of an insulation fluid (e.g., an insulation oil) of a power transformer.

The data processing system and method disclosed herein may be operative to interact with protection and/or monitoring devices of the substation. The data processing system and method disclosed herein may be operative to interact with protection and/or monitoring devices that use threshold-based approaches to detect an abnormality and/or fault. Such conventional protection and/are monitoring devices may be intelligent electronic devices (lEDs).

As used herein, the term lED refers to a device that may be operative in a manner compatible with or in accordance with IEC 61850, e.g., in accordance with the latest version of IEC 61850 as available on the filing or priority date of this application.

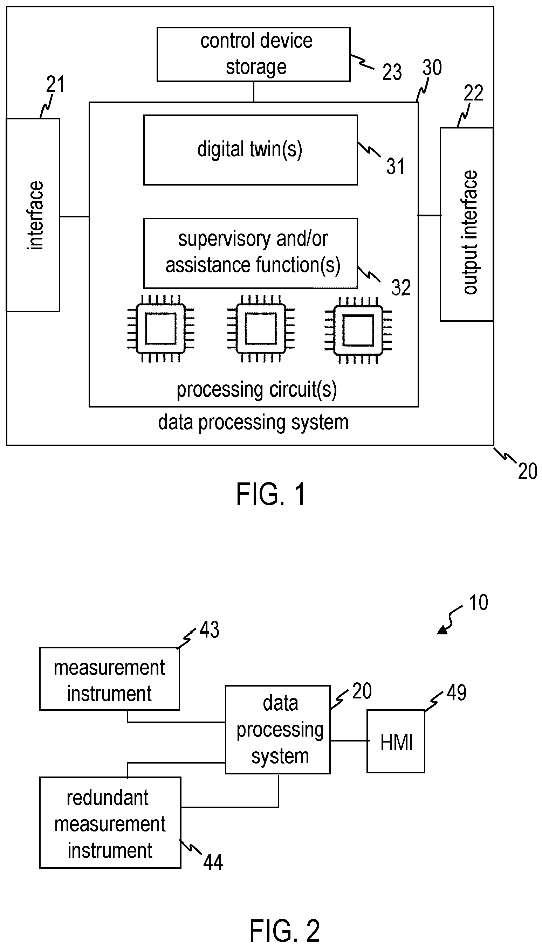

Figure 1 shows a data processing system 20 operative to process data that includes measurements acquired or generated by one or several measurement instruments of a data acquisition system. The data may comprise event data, without being limited thereto.

The data processing system 20 may be implemented as an apparatus comprising an apparatus housing in which the components illustrated in Figure 1 are accommodated. The data processing system may be implemented as a combination of several apparatuses that are communicatively coupled to each other. The data processing system 20 may be operative to be used in combination with, and to co-operate with, protection and/or monitoring devices that implement threshold-based decision logics.

The data processing system 20 may generally be operative to provide protection and/or monitoring functions for a substation. The substation may be an electric power system substation, without being limited thereto. The substation comprises a primary system comprising a plurality of primary system components, such as, without limitation, transformers, circuit breakers, other switchgear, reactors, impedances, generators, or other primary system components. The substation comprises a secondary system comprising measurement instrumentation that acquires data to be processed by at least the data processing system 20 and/or other data acquisition systems. The secondary system may optionally comprise additional protection and/or monitoring devices (such as lEDs that may implement threshold-based decision logics).

The data processing system 20 may be implemented at the substation level. The data processing system 20 may be installed at or within the substation. The data processing system 20 may be operative to interact with control center, such as a national or regional control center of a power grid. The data processing system 20 may be different from and spaced from the control center (e.g., by being provided in a substation). The data processing system 20 may be integrated with a control center.

As will be explained in more detail below, the data processing system 20 is operative to utilize at least one digital twin 31 that models one or several components of the primary system or optionally the primary system of the substation as a whole. Several digital twins may be used in combination.

The data processing system 20 may be operative to additionally execute at least one supervisory and/or assist function 32. The at least one supervisory and/or assist function 32 may be or may comprise a supervisory function operative to check results of a state assessment that is based on at the at least one digital twin. Alternatively or additionally, the at least one supervisory and/or assist function 32 may comprise an assist function operative to support the state assessment based on the at least one digital twin.

The data processing system 20 comprises at least one processing circuit 30. The at least one processing circuit 30 is operative to be coupled to at least one interface 21. The at least one processing circuit 30 is configured to receive data acquired or generated by the data acquisition devices, such as measurement instruments or other sensors, of the secondary system of the substation. The at least one processing circuit 30 is operative to perform a state assessment based on the digital twin or digital twins 31, and to execute the at least one supervisory and/are assistant function 32.

The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The at least one processing circuit 30 may be operative to utilize measurements associated with a component of the primary system, such as electric characteristics the terminals of the component, to perform the state assessment. The electric characteristics may comprise time domain samples of voltages, currents and/or powers (e.g., instantaneous samples of any of these quantities) and/or frequency domain phasors of voltages, currents, and/or powers. The specific implementation of the state assessment will generally be dependent on the type of component in question. The skilled person has at his/her disposal a variety of techniques of performing a state assessment, such as a state of health (SoH) assessment, based on measurements. For illustration rather than limitation, a Markov chain implementation may be used to model transitions between healthy, incipient abnormality, and fault states of any component of the primary system. The received measurements may be used to assess the initial state of the Markov chain modeling. Alternatively or additionally, incipient or progressed abnormalities in the state of any component of the primary system of the substation may be detected and classified based on, e.g., deviations of measurements from expected behavior determined based on the digital twin.

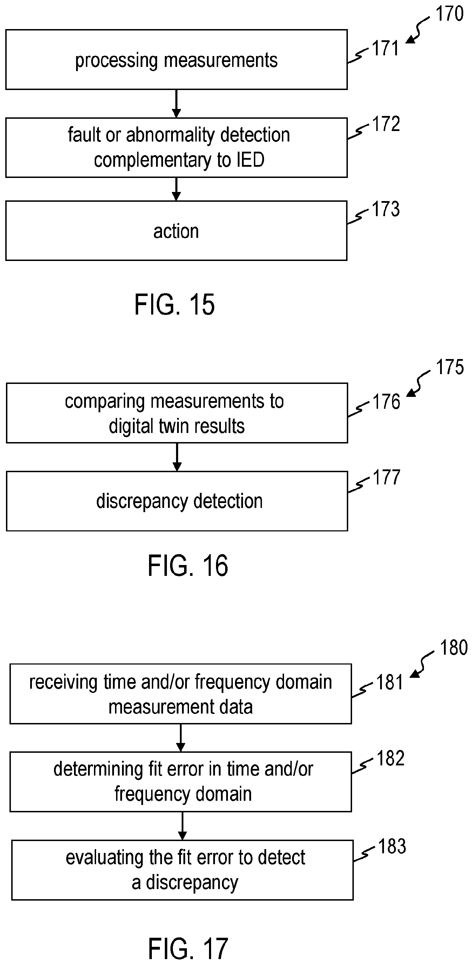

Such deviations may be detected and, optionally, quantified based on fit errors between digital twin results and measurements. The fit errors may be quantified over a time interval or over a frequency range, using any suitable metric (such as a L2-norm or other L-norm) over the time interval or frequency range. An implementation of the detecting deviations are described in more detail with reference to, e.g., Figure 17.

The at least one processing circuit 30 may be operative to use domain knowledge to perform one or several plausibility checks to, e.g., detect a deviation between measurements from expected behavior determined based on the digital twin or to otherwise process the measurements. The domain knowledge is dependent on the respective primary system. For illustration, for an electric power system substation, the domain knowledge may comprise electrodynamics rules such as Kirchoff's rules, consistency between switch or circuit breaker status and current, voltage, and/or power measurements, typical variation limits on voltage and/or current, directionality or polarity of currents at primary system component terminals etc. Any one or any combination of these information elements may be used in the data processing. For a fluid grid (such as a fresh water, heating or coolant circuit, waste water, or process fluid system), the domain knowledge may comprise fluid dynamic relationships, consistency between valve status and measurements of fluidic characteristics (such as dynamic and/or static pressures, velocities, and/or densities).

While the skilled person has various techniques at his/her disposal for implementing the state assessment, the skilled person can use, without limitation, generic models that have a discrete state space representing different states of the respective asset (such as healthy, incipient fault, fault). EP 3 923 214 A1, EP 3 923 213 A1, and EP 3 923 101 A1 discloses techniques that can be used to perform the state assessment for any asset. Generally, transition probabilities between discrete states of a probabilistic model (such as a Markov chain model space) may be inferred from measurements (which may be historic, or acquired at the specific substation, and/or which may be based on fleet learning approaches). The digital twin(s) may be used in various ways, such as by inferring transition probabilities of a discrete state model based on the modeling performed using the digital twin(s). The measurements from the secondary system may be used to initialize simulations that provide, as their output, a probability that the primary system component is healthy, or an indicator for the degradation of the primary system component (such as a remaining useful life).

Yet another decision making technique that may be used in any of the embodiments disclosed herein is provided in EP 4 080 702 A1.

An overview of various exemplary techniques that the skilled person has at his/her disposal for implementing the state assessment is provided by J. Zhao et al., "Power System Dynamic State Estimation: Motivations, Definitions, Methodologies, and Future Work", IEEE Transactions on Power Systems ( Volume: 34, Issue: 4, July 2019), pages 3188 - 3198, 23 January 2019, IEEE, DOI: 10. 1109jTPWRS. 2019. 2894769.

In yet other exemplary implementations, a state assessment may be based on a discrepancy between the measurements (of, e.g., time- or frequency domain electric characteristics, such as voltage(s), current(s), and/or power(s), which may be obtained by phasor measurement units or otherwise) and what is expected to be measured, based on the digital twin(s).

C. Brosinsky et al., "Recent and prospective developments in power system control centers: Adapting the digital twin technology for application in power system control centers", 2018 IEEE International Energy Conference (ENERGYCON), Limassol, Cyprus, 03-07 June 2018, IEEE, DOI: 10.1109/ENERGYCON.2018.8398846, and Y. Yang et al., "State Evaluation of Power Transformer Based on Digital Twin", 2019 IEEE International Conference on Service Operations and Logistics, and Informatics (SOLI), 06-08 November 2019, Zhengzhou, China, IEEE, DOI: 10.1109/SOLI48380.2019.8955043 provide further examples of techniques that may be used, also specifically in the power system domain, to implement a state assessment based on digital twin(s).

The digital twin 31 or the digital twins 31 are not limited to modeling electric characteristics. For illustration, for components of a power system substation, the modeling may comprise electric, thermal, and/or mechanically modeling for at least some of the components. Additional modeling may be implemented, for example for modeling characteristics of an insulation oil of a power transformer, in which case a concentration of the soft cases in the insulation oil may be modeled. For further illustration, the modeling may comprise modeling a state of a transformer breather that may be provided on a transformer of the substation.

The at least one processing circuit 30 may be operative to use any one or any combination of additional information that is available to the at least one processing circuit 30 and that may be useful for checking and/or supporting the state assessment that this based on the at least one.

The at least one supervisory and/or assist function 32 may be operative to use redundant measurements included in the data received at the at least one interface 21 to check whether a state assessment that classifies a component of the primary system as being abnormal or faulty is correct. The redundant measurements, which may originate from redundant measurement instrumentation in the secondary system, may be used to check whether the state assessment based on the at least one digital twin 31 is consistent with the redundant measurement or whether it may be incorrect due to, e.g., incorrect measurement instrumentation settings.

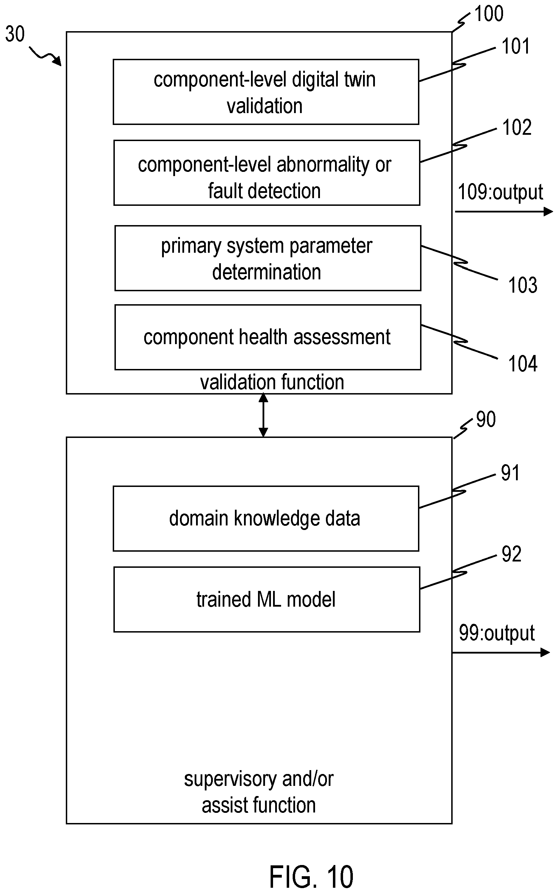

Various specific implementations of checking the state assessment are described in more detail herein. For illustration, as will be explained in more detail with reference to Figure 10, Figure 11, and Figures 24 to 40, the supervisory and/or assist function 32 may comprise a supervisory function that uses redundant measurements to determine whether an identification of a fault (which may be identified by a validation function of the data processing system 20 based on the digital twin) is correct in the sense that the fault is present in the primary system, or whether the identification is incorrect in the sense that it is caused by incorrect instrumentation settings or any root cause other than a fault in the primary system.

Alternatively or additionally, the supervisory and/or assist function 32 may be operative to use domain knowledge data or other data-driven processing techniques (which may comprise, e.g., a trained machine learning (ML) model) to support the state assessment that is based on the at least one digital twin. Based on domain knowledge data or using the ML model, the supervisory and/or assist function 32 may be operative to determine which data are to be disregarded as being unreliable when performing the state assessment.

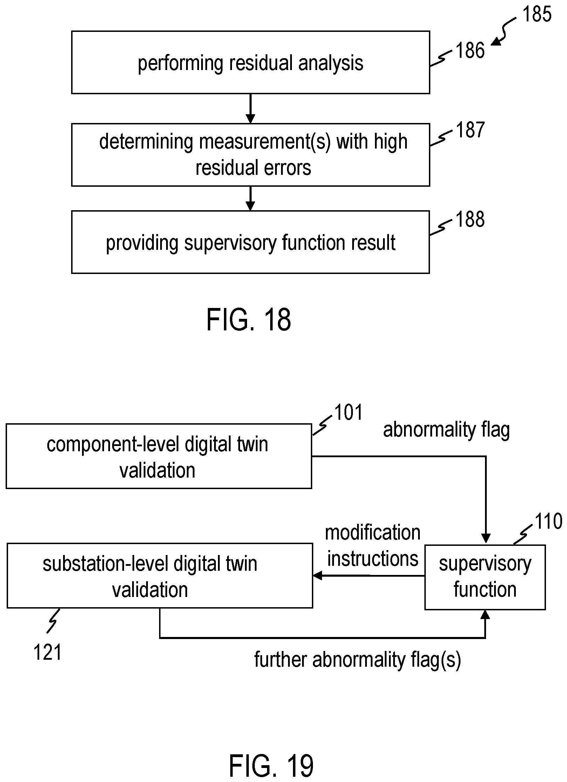

As a specific implementation that will be discussed in more detail herein (see, e.g., Figure 18), a the systems and methods disclosed herein may use a residual analysis to check the state assessment and/or support the state assessment. The residual analysis may be employed to determine whether or not a fault identification is caused by an actual fault in the primary system. The residual analysis may be employed to determine whether a fault identification is caused by an actual fault in the primary system, erroneous measurement channel(s), such as incorrect measurement instrumentation settings, or other root causes.

Various specific implementations of assisting the state assessment are described in more detail herein. For illustration, as will be explained in more detail with reference to Figure 10, the supervisory and/or assist function 32 may comprise an assist function that may be based on domain expertise and/or an ML model to judge events based on patterns learnt a priori from previous events (such as data collected from lEDs, disturbance recorders, historian database, etc.). Based on the domain knowledge and prior measurements, the assist function may provide a flag which may indicate, e.g., which data are to be disregarded as being unreliable when performing the state assessment, or which may indicate, e.g., a probability that the state assessment is correct (based on the ML model output).

The data processing system 20 may be operative to perform different actions responsive to the state assessment and the output of the supervisory and/or assist function 32. For illustration, and as explained in more detail herein, the data processing system 20 may be operative to react differently to incoming signals, data, commands, or requests, depending on whether the supervisory and/or assist function 32 identifies in instrumentation error in the secondary system.

The data processing system 20 may be operative to perform an output and/or control function responsive to the state assessment based on the digital twin(s) 31 and the output of the supervisory and/or assist function 32.

The data processing system 20 may control a human machine interface (HMI), via an output interface 22, to output an alarm, warning, or other information relating to the state assessment.

Alternatively or additionally, the data processing system 20 may issue a command, via output interface 22, to perform a corrective and/or a mitigating action responsive to the state assessment and the output of the supervisory and/or assist function 32. The corrective and/or mitigating action may comprise selectively overriding a decision taken by a decision logic of an lED that is based on a threshold-based evaluation of measurements. This may be appropriate when the data processing system 20 determines that an abnormality is caused by an incorrect instrumentation from which the lED receives its measurements, rather than a fault in the primary system. Overriding a decision taken by a decision logic may also be appropriate when the data processing system 20 picks up a fault that has remained undetected by the threshold-based decision logic that may be implemented in an lED. The data processing system 20 may then be operative to cause a trip of switchgear or to trigger the lED to cause the trip of the switchgear, when the data processing system 20 picks up a fault that has remained undetected by the associated IED.

The data processing system 20 may also be operative to communicate with at least one other data processing system installed in or at another substation of, e.g., an electric power grid. To this end, results of the processing may be provided by the data processing system 20 to the other data processing system via the output interface 22. The data processing system 20 may be operative to communicate in a manner that is compatible or in accordance with IEC TR 61850-90 (e.g., IEC TR 61850-90-1, -2, and -3), e.g., in a manner that is compatible with the version of IEC TR 61850-90 as in force on the filing or priority date of this application. The data processing system 20 may share results of the processing, which are based on the state estimation and the at least one support and/or assist function, with the other data processing system or a national or regional control center.

The data processing system 20 may use redundant measurements captured by the redundant measurement instrumentation of the secondary system of the substation. Such redundant measurements may be used to check the state assessment and/or support the state assessment based on the digital twin.

Figure 2 is a block diagram of a substation 10 comprising a secondary system having several measurement instruments 43, 44 for the same physically parameter. For illustration, the several measurement instruments 43, 44 may measure a same current, voltage, and/or phasor at a same node (e.g., a terminal of a component of the primary system) within the primary system (such as terminals of a component of the primary system).

The data processing system 20 may be operative to use at least the measurement of a measurement instrument 43 to perform the state assessment based on the digital twin.

The data processing system 20 may be operative to use at least the measurement of a redundant measurement instrument 44 to check and/or assist the state assessment that is performed based on the digital twin. The measurement of the redundant measurement instrument 44 may be used by the data processing system 20 to discriminate faults or abnormalities in the primary system from instrumentation errors, unsuitability of a model of a digital twin, incorrect model parameterizations of a model of a digital twin, and/or other root causes for a discrepancy between the measurements captured by the measurement instrument 43 and the behavior expected according to the digital twin 31.

The data processing system 20 may be operative to control an HMI 49 to output an alarm of warning or other information, responsive to the state assessment as checked by the supervisory and/or assist function 32, with the check being performed using at least the measurement of redundant measurement instrument 44.

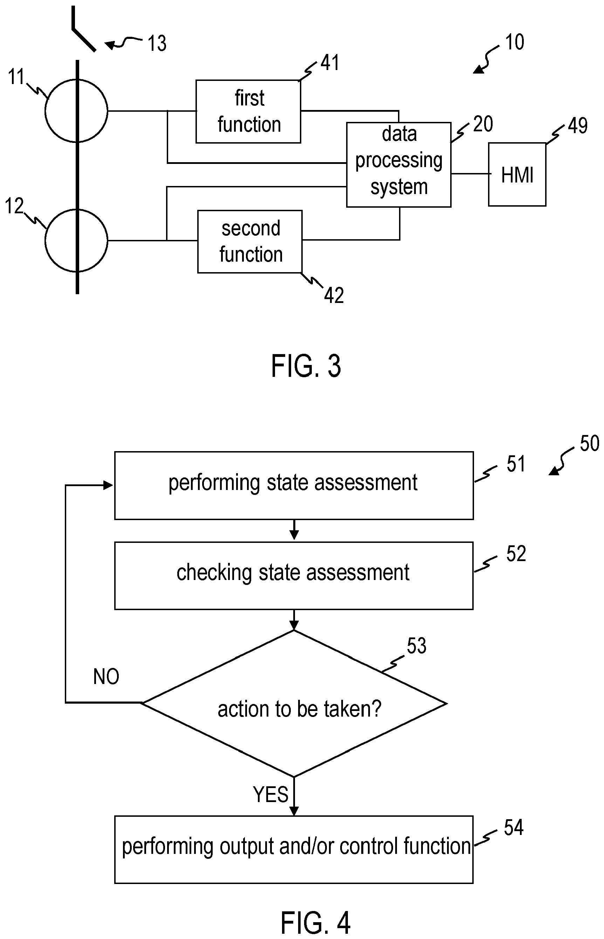

Figure 3 shows a further specific example of a substation 10. A primary system comprises components that, in the illustrated example, carry a current. The current may be a current of a power grid or other power generation, transmission, end or distribution system. The primary system may comprise switchgear 13, which may comprise a circuit breaker (CB), powers switch, or other switchgear.

Current transformers (CTs) 11, 12 may measure currents in one or several phases of a line or busbar. The CTs 11, 12 may measure the same current (e.g. the current or currents in the same phase or phases), but may have different measurement characteristics, such as different accuracy, different acquisition rates, and/or different response characteristics.

An automation system of the substation executes a first decision logic 41 that performs a first function and a second decision logic 42 that performs a second function. The first and second functions may be protection and/or monitoring functions. For illustration, at least one of the first and second functions may be a protection function operative to trip the CB or switch 13. The other one of the first and second functions may be a monitoring function are another protection function. For illustration, the different functions may be related to distance and time domain protection, respectively, without being limited thereto. The first decision logic 41 uses the measurement of the first current transformer 11 to perform the first function. The second decision logic 42 uses the measurement of the second current transformer 12 to perform the second function.

The data processing system 20 may be operative to use the measurement of at least one of the CTs 11, 12 to perform the state assessment, based on at least one digital twin. The data processing system 20 may be operative to use the measurement of at least the other one of the current transformers 11, 12 to perform the supervisory and/or assist function 32.

Figure 4 is a flow chart of a method 50 of processing data acquired or generated by a secondary system of a substation. The method 50 may be performed automatically by the processing device 20.

At process block 51, the data processing system performs a state assessment. The state assessment is performed based on a model, also referred to as digital twin, which uses data acquired or generated by a secondary system of a substation as input. The state assessment may be performed based on several models, which may model one or several of: individual components of a primary system of the substation system (140) the primary system of the substation as a whole, the secondary system. The data received from the secondary system may comprise measurement values acquired by the secondary system and/or event data generated by the secondary system.

At process block 52, the data processing system checks the state assessment. The data processing system may use redundant measurements included in the data received from the secondary system to check the state assessment. The data processing system may alternatively or additionally use domain knowledge data and/or a trained ML model to check the state assessment. Checking the state assessment may be performed using a dedicated function different from the digital twin, which receives other inputs than the digital twin. This dedicated function may be implemented as a supervisory or assist function.

At process block 53, it is determined whether an action is to be taken. The determination at process block 53 may be performed based on the state assessment and based on an output of the supervisory or assist function.

If no action is to be taken, the method reverts to process block 51. The state assessment and checking the state assessment may be repeated continually, i.e. in an ongoing basis, during field operation of the substation.

If an action is to be taken, the action is performed at process block 54. The action may comprise an output action, in which an alarm, warning, or other information relating to the primary system and/or secondary system of the substation is output layer an HMI. The action may alternatively or additionally comprise a corrective or mitigating action. The corrective or mitigating action may comprise overriding an IED, for example, or another protection logic that operates based on thresholds, to thereby provide improved protection for the substation.

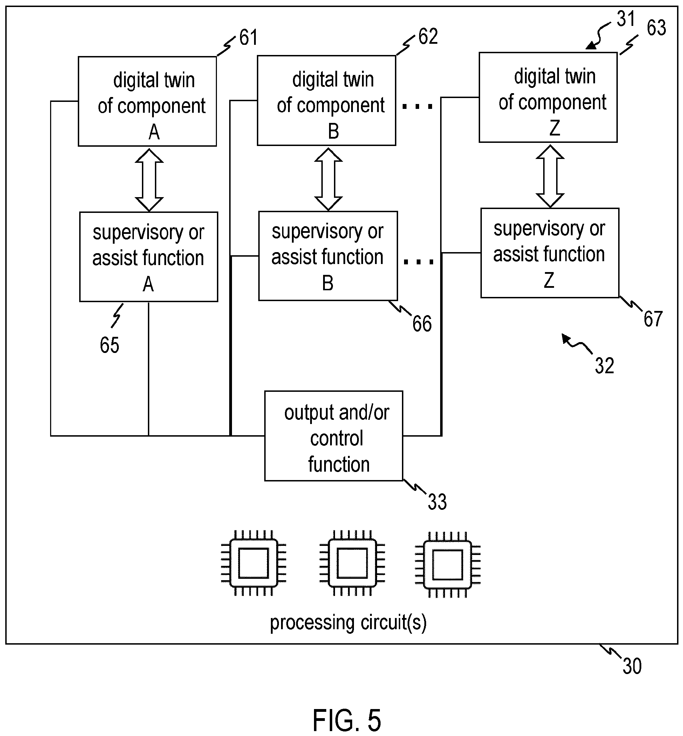

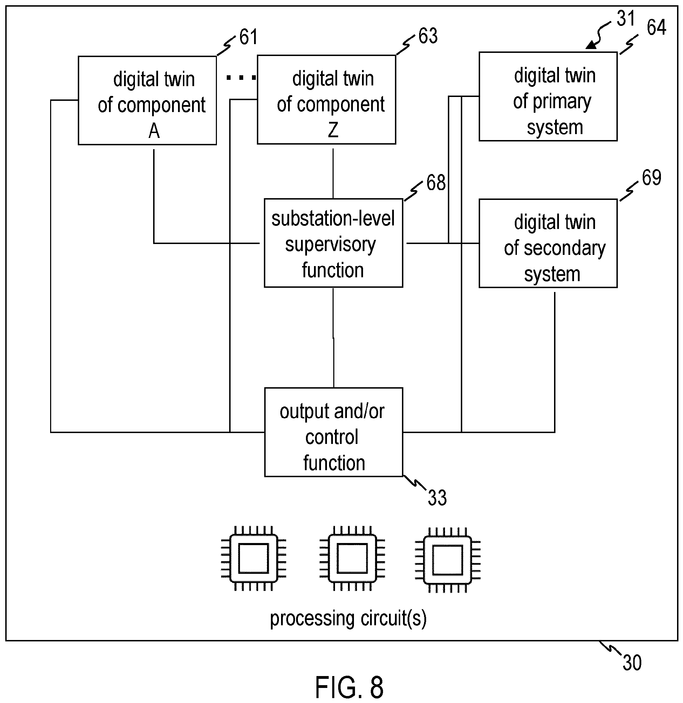

Various implementation of digital twins and supervisory and/or assist functions that may be employed by the data processing system 20 and data processing method will be described with reference to Figure 5, Figure 6, Figure 7, in Figure 8.

Figure 5 shows a functional block diagram that illustrates processing performed by the at least one processing circuit 30 of the data processing system 20.

The data processing system 20 uses a plurality of first digital twins 61, 62, 63. Each of the first digital twins 61, 62, 63 models an associated component of the primary system. The plurality of first digital twins 61, 62, 63 may respectively model a primary system component selected from a group comprising or consisting of transformers, transmission lines, buses, capacitor banks, reactors, surge arrestors. Several first digital twins may model the same component of the primary system. The digital twins may provide electric and, optionally, thermal and/or chemical modeling of the respective component of the primary system.

The skilled person has at his/her disposal a wide variety of techniques of modeling primary system components of a primary system of a substation. Any known modeling technique may be employed that is capable of being executed by the data processing system 20 during field operation and, preferably, has a computational complexity that lends itself to real time modeling.

The data processing system 20 further executes a plurality of the supervisory or assist functions 65, 66, 67. The plurality of supervisory or assist functions 65, 66, 67 may each be associated with one of the plurality of first digital twins. The plurality of supervisory or assist functions 65, 66, 67 may each have inputs that can comprise the inputs of the respective digital twin, but also use additional information toward check and/or support the state assessment based on the associated digital twin. The additional information may comprise one or several of redundant measurements and/are domain knowledge data that may be employed to check or supplement a state assessment performed by the associated digital twin.

The data processing system 20 may further execute an output and/or control function 33. The output and/or control function may be operative to perform an action responsive to a state assessment that is based on the plurality of digital twins 61, 62, 63 and an output of the plurality of supervisory or assist functions 65, 66, 67. The action may comprise the outputting of an alarm, warning or other information relating to the primary and/or secondary system of the substation buyer and HMI. The action may comprise a corrective or mitigating action that is taken responsive to the detected fault or abnormality.

As explained with reference to Figure 5, the data processing system may utilize a plurality of first digital twins and associated supervisory or assist functions. Such processing modules are normally easy to implement, as modeling an individual component of the primary system is less complex to implement than modeling at least the primary system of the substation as a whole.

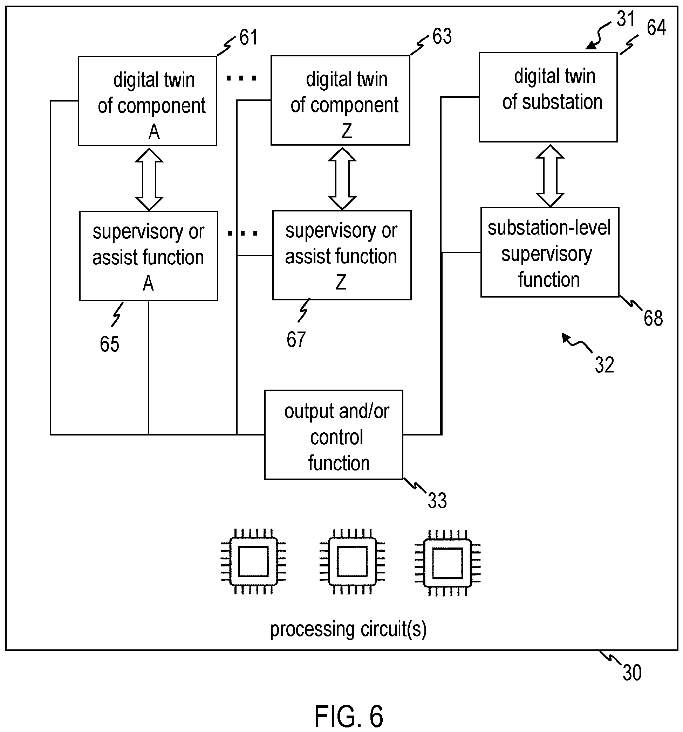

Figure 6 shows another functional block diagram that illustrates processing performed by the at least one processing circuit 30 of the data processing system 20.

The data processing system may use a plurality of first, component-level digital twins 61, 63. The data processing system may further use a plurality of component-level supervisory or assist functions 65, 67. These processing modules may be implemented as described with reference to Figure 5.

The data processing system further comprises a digital twin 64 of the primary system of the substation. The digital twin 64 of the primary system may model electric characteristics in the primary system of the substation. The digital twin 64 of the primary system of the substation may model voltages, currents, and/or phasors at all relevant nodes of the primary system of the substation. The digital twin 64 of the primary system may optionally model thermal and/or mechanical characteristics. For illustration, the digital twin 64 of the primary system may optionally model a temperature within a transformer tank and/or mechanical loads on a transformer core or transformer tank.

The data processing system further executes a substation-level supervisory function 68. The substation-level supervisory function 68 may receive outputs from all component-level digital twins 61, 63 and the digital twin 64 of the primary system of the substation. The substation-level supervisory function 68 may receive outputs of their component-level supervisory or assist functions 65, 67. The substation-level supervisory function 68 may receive additional information, such as redundant measurements acquired by the secondary system, to check consistency of modeling results or perform additional operations.

In one implementation, the substation-level supervisory functions 68 may be operative to perform a root cause analysis to identify a root cause of a detected discrepancy of the data acquired or generated by the secondary system and the modeling results. The identification of the root cause may comprise distinguishing root causes selected from a group consisting of: an abnormality in the primary system, a fault in the primary system, incorrect settings of measurement instrumentation in the secondary system, unsuitability of at least one model employed by a digital twin, and suitable parameterization of at least one digital twin.

As explained with reference to Figure 6, the data processing system may utilize a second digital twin that models the primary system of the substation. Such a digital twin is more complex to implement than the component-level digital twins 61, 63, but can be set up based on the known fundamental equations governing electric potentials and current flows as well as thermal and mechanical responses in electric power system substations.

The second digital twin 64 and the supervisory function 68 that operate at the substation level (rather than being limited to a single component of the primary system) provide an additional level of reliability when performing substation protection and/or monitoring functions.

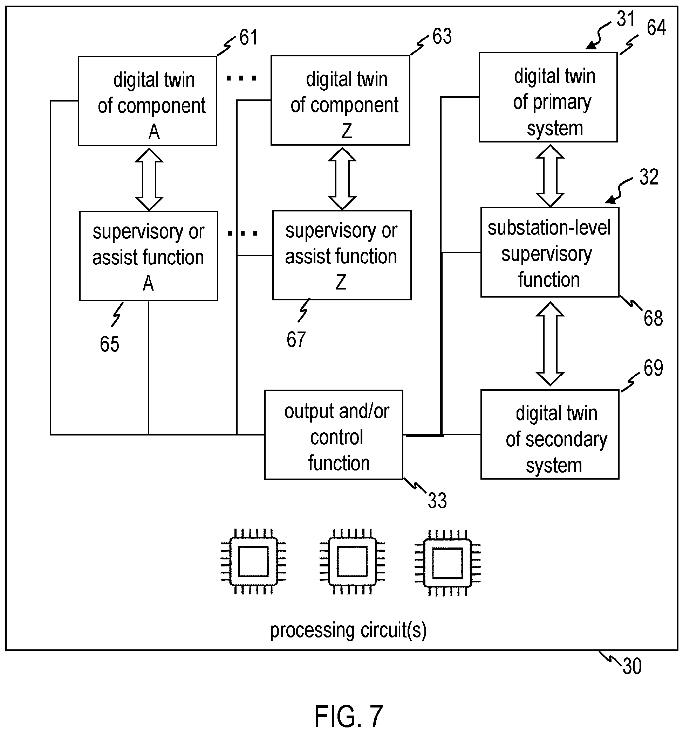

Figure 7 shows another functional block diagram that illustrates processing performed by the at least one processing circuit 30 of the data processing system 20.

The data processing system may use a plurality of first, component-level digital twins 61, 63 and a second substation-level digital twin 64. The data processing system may further use a plurality of component-level supervisory or assist functions 65, 67 and a substation-level supervisory functions 68. These processing modules may be implemented as described with reference to Figure 5 and Figure 6.

The data processing system further comprises a digital twin 69 of the secondary system of the substation. The digital twin 69 of the secondary system may model the secondary system, such as measurement instrumentation of the secondary system. The digital twin 69 of the secondary system of the substation may model may response characteristics of current transformers or other measurement instrumentation of the secondary system. The modeling may comprise modeling response characteristics. The modeling may use nameplate information of the measurement instrumentation.

The data processing system further executes a substation-level supervisory function 68, which may generally be operative in a manner as explained with reference to Figure 6. The substation-level supervisory functions 68 may also receive and process an output of the digital twin 69 that models the secondary system.

The provision of a digital twin 69 of the secondary system further facilitates identifying a root cause of a detected discrepancy of the data acquired or generated by the secondary system and the modeling results. The identification of the root cause may comprise distinguishing root causes selected from a group consisting of: an abnormality in the primary system, a fault in the primary system, incorrect settings of measurement instrumentation in the secondary system, unsuitability of at least one model employed by a digital twin, and suitable parameterization of at least one digital twin.

The output and/or control function 33 may perform its action using, inter alia, the results of the modeling of the secondary system as performed using the digital twin 69. The action may be dependent on the remote cause for the identified discrepancy between measurements and modeling.

Figure 5, Figure 6, and Figure 7 show implementations of the data processing system 20 in which there are component-level assist functions 65, 66, and 67. However, in yet another implementation, the data processing system does not need to have component-level assist functions 65, 66, and 67. Such a data processing system is illustrated in Figure 8.

Figure 8 shows another functional block diagram that illustrates processing performed by the at least one processing circuit 30 of the data processing system 20. The substation-level supervisory function 68 may be operative responsive to results obtained may component-level digital twins 61, 63, the digital twin and 64 of the primary system, and the digital twin as 69 of the secondary system. Based on these inputs, as well as additional information such as redundant measurements, the substation-level supervisory function 68 is operative to check the consistency of modeling performed by the various digital twins and/or perform a root cause analysis of a detected discrepancy.

Figure 5, Figure 6, Figure 7, and Figure 8 show functional components of the data processing system 20 according to various implementations. Operation of functional modules at component-level and at substation-level, which may be used in the data processing system of any one of Figure 5, Figure 6, Figure 7, and Figure 8, will be described next.

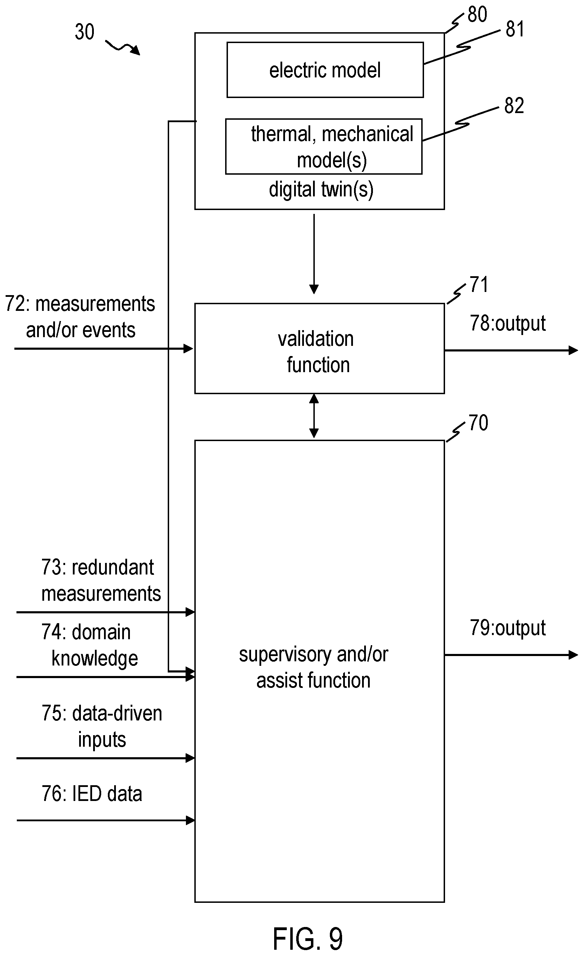

Figure 9 is a functional block diagram of modules executed by the processing circuit 30.

The processing circuit 30 has one or several digital twins 80. The one or several digital twins 80 respectively may comprise an electric model 81. The one or several digital twins 80 may comprise optional additional models, such as thermal, mechanical, and/or still other models 82. As mentioned above, techniques of modeling an individual component of the primary system or of the primary system as a whole are available to the scheduled person and need not be discussed in greater detail herein. The one or several digital twins 80 may be used to implement the component-level digital twins 61, 62, 63. The one or several digital twins 80 may be used to implement that digital twin 64 of the primary system. That digital twin 69 for the secondary system normally does not need to include thermal and/or mechanical models.

The processing circuit 30 performs a model validation function 71. The model validation function 71 may provide an output 78 that may be used by the supervisory and/or assist function 70 or that may otherwise be used to determine whether an action is to be taken. The model validation 71 may be performed based on a discrepancy between data 72 from the secondary system and the behavior expected according to the digital twin(s) 80.

The data 72 from the secondary system may include measurements and/or event data. The data 72 from the secondary system may comprise currents and/or voltages at all relevant nodes of the primary system. The data 72 may optionally include information on a phase angle (relative to a reference) of an electric characteristic such as current, voltage, and/or power. The data 72 may include both a magnitude and a phase angle of the respective electric characteristic. The data 72 from the secondary system may comprise phasor measurements.

The output 78 may be used by the data processing system to perform the output and/or control function 33. An action may be taken selectively dependent on whether the model is considered to be valid, as reflected by the model validation output 78. Additionally or alternatively, a decision on which action is taken may be dependent on whether the model is considered to be valid, as reflected by the model validation output 78.

The processing circuit 30 performs a supervisory and/or assist function 70. The supervisory and/or assist function may be a component-level function 63, 64, 65 or a substation-level function 68. As explained with reference to Figure 5, Figure 6, Figure 7, in Figure 8, the supervisory and/or assist function 70 receives a state assessment that is based on the at least one digital twin 80. The supervisory and/or assist function 70 may check a validity of the state assessment and/or may perform other processing that assists the model-based protection or monitoring performed by the data processing system 20.

The supervisory and/or assist function 70 receives a state assessment based on the at least one digital twin 80. The supervisory and/or assist function may also receive a result of the model validation 70 one.

The supervisory and/or assist function 70 uses additional information to check the state assessment and/or otherwise assist the protection or monitoring function performed by the data processing system 20. This additional information may comprise redundant measurements 73. The redundant measurements may be provided in the form of measured values are as event data. The redundant measurements 73 may relate to a same electric or other physical parameter used when performing the state assessment. The use of redundant measurements 73 is particularly preferred when the supervisory and/or assist function 70 is a substation-level function.

Alternatively or additionally, the additional information may comprise domain knowledge data 74. The domain knowledge data 74 may be based on previous events in the substation or in other substations having a similar or identical configuration as the substation in question.

Alternatively or additionally, the additional information may comprise other data-driven inputs 75. For illustration, previous events may be used for training a ML model. The historic data is thus encoded in parameters of the ML model. The ML model may comprise an input layer receiving measurements. The ML model may have an output that provides a flag related to the model of a primary system component are of the whole a primary system of the substation. The data-driven inputs 75 may, thus, comprise a trained ML model or parameters of an ML model as learnt during training.

Alternatively or additionally, the additional information may comprise decision logic outputs 76 of other decision logics deployed in the substation. The decision logic outputs 76 may be decisions taken by the IEDs, such as trip or non-trip (restrain) for switchgear.

The supervisory and/or assist function 70 may utilize any one or any combination of these additionally pieces of information to check the state assessment or otherwise support the protection or monitoring function performed by the data processing system 20. In output 79 of the supervisory and/or assist function 70 may be used by the data processing system to perform the output and/or control function 33. An action may be taken selectively dependent on whether the supervisory and/or assist function 70 considers the state assessment to be consistent with any one or any combination of the additional pieces of information 73, 74, 75, and/or 76. Additionally or alternatively, a decision on which action is taken may be dependent on whether the supervisory and/or assist function 70 considers the state assessment to be consistent with any one or any combination of the additional pieces of information 73, 74, 75, and/or 76. Additionally or alternatively, a decision on which action is taken may be dependent on a root cause for a discrepancy between measurements and digital twin modeling determined by the supervisory and/or assist function 70 using any one or any combination of the additional pieces of information 73, 74, 75, and/or 76.

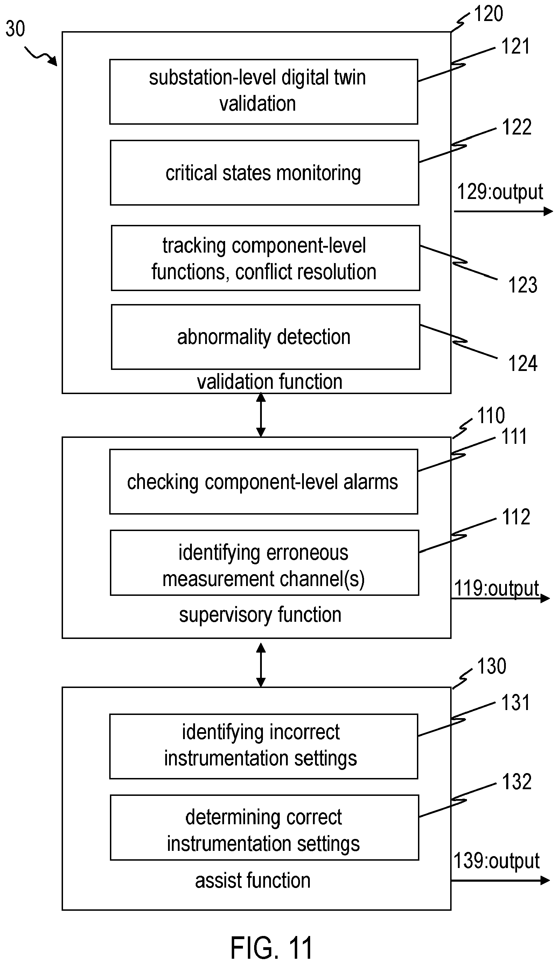

Specific implementations of functional blocks performed by the processing circuit to implement component-level and substation-level functions will be described with reference to Figure 10 (component-level functions) and Figure 11 (substation-level functions).

Figure 10 shows a functional block diagram of modules implemented by the processing circuit 30. The processing circuit 30 may perform a validation function 100 to validate a digital twin of a component (with the validation function 100 being an illustrative implementation of the previously described validation function 71). The processing circuit 30 may perform an assist function 90 (with the assist function 90 being an illustrative implementation of the previously described supervisory and/or assist function 70).

The validation function 100 may be implemented using a model-driven solution to utilize a digital twin of the component and its terminal measurements. This may be done for performing any one or any combination of the following:
- A component-level digital twin validation 101: The digital twin may be validated continually (i.e., in an ongoing, optional regularly repeating manner). This validation may be performed in real time during field operation. Steady-state and/or event data may be used to perform the component-level digital twin validation 101.
- A determination of internal abnormalities 102 in the component to trigger an action (such as alarms, warnings, or other outputs) 109. This may include power lines which connect substations by a seamless exchange of measurements and other internal states through inter-substation communication (e.g., in accordance with or in a manner compatible with IEC TR 61850-90-1, -2, and -3, as in force on the priority or filing date of this application).
- A determination of primary system parameters 103 that are not available by direct measurements from the secondary system. Examples for such primary system parameters include, without limitation, any one or any combination of flux linkage, magnetizing currents, delta branch currents, rotor angle/position, renewable control and operating parameters, etc., of the respective component. The respective parameter may be estimated based on the received data from the secondary system. The output 109 may be based on the determined parameters and may be used for monitoring, control and other network level applications such as network state estimation, network source equivalent estimation, etc. through the substation-level functions that will be described in more detail with reference to Figure 11, for example.
- An assessment 104 of component health and incipient failure modes. The health assessment may be based on electric modeling and measurements. The health assessment may additionally be based on thermal and/or mechanical state assessments.

The output 109 of the validation module may be used by the substation-level functions that will be described in more detail with reference to Figure 11 and/or by the output and/or control function 33.

The assist function 90 may be operative to assist the validation function 100 in a correct assessment of abnormality under model errors and measurement uncertainties (such as systematic errors in instrumentation, noise, etc.). For example, the assist function 90 may assist the validation function 100 by supplying an event flag indicating whether an event is external or internal to the component of the primary system.

Alternatively or additionally, the assist function 90 may be operative to supplement the validation function 100 with lED flags such as CT saturation, etc. so that the operation of the validation function 100 can be adjusted by discarding measurements that are unreliable based on, e.g., the respective lED flag.

Alternatively or additionally, the assist function 90 may be operative to detect scenarios in which incoming data may be unreliable using sampled values leading to a faster detection of measurement/model issues. This information can help avoiding false judgements in the presence of an erroneous model of the component of the primary system.

The assist function 90 may be operative to provide an additional level of security, even when the substation-level processing is not available.

The assist function 90 may implement solutions based on domain expertise 91 and/or use an ML model 92 to judge events based on patterns learnt a priori from previous events (such as data collected from lEDs, disturbance recorders, historian database, etc.). The trained ML model may have an input layer that receives measurements from the secondary system and an output layer that indicates whether or not measurements are reliable and/or whether measurements are to be discarded.

Output 109 from validation function 100 and the assist output 99 of assist function 90 can be logically combined to provide a component-level protection/monitor alarm.

Figure 11 shows a functional block diagram of modules implemented by the processing circuit 30. The processing circuit 30 may perform a validation function 120 to validate a digital twin of a primary system of the substation (with the validation function 120 being an illustrative implementation of the previously described validation function 71). The processing circuit 30 may perform a supervisory function 110 (with the supervisory function 110 being an illustrative implementation of the previously described supervisory and/or assist function 70). The processing circuit 30 may perform an assist function 130 (with the assist function 130 being an illustrative implementation of the previously described supervisory and/or assist function 70).

The validation function 120 may be implemented using a model-driven solution to utilize a digital twin of a primary system (and optionally a secondary system) of the substation system (140) substation-wide measurements, and the output(s) 99, 109 of the component-level processing. This may be done for performing any one or any combination of the following:
- A substation-level digital twin validation 121: The digital twin may be validated continually (i.e., in an ongoing, optional regularly repeating manner). This validation may be performed in real time during field operation. Steady-state and/or event data may be used to perform the component-level digital twin validation 121. The substation-level digital twin validation 121 may comprise a supervision of the component-level model validations 101.
- A critical states monitoring 122. The monitoring 122 may comprise continually monitoring and/or tracking of critical states (measured or unmeasured parameters). An output 129 based on the critical states monitoring 122 may be used for smooth operation of the substation. Alternatively or additionally, the data processing system 20 may be operative to provide an output 129 based on the critical states monitoring for an exchange of inter-substation data for network level applications and/or protection of inter-connecting power lines.
- A tracking of component level determinations 123, which may be based on the output(s) 99, 109 of the component-level processing. The tracking 123 may comprise checking that the outputs 99, 109 obtained for the various components of the primary system are consistent with each other. The tracking 123 may comprise a conflict resolution in case of a conflict or contention between results provided by different component-level functions 90, 100.
- A detection 124 of an abnormality within the substation. An output 129 based on the abnormality detection 124 may be used for various actions, such as triggering protection/monitor alarms.

The supervisory function 110 may be triggered by the substation-level validation function 120. The supervisory function 110 may be operative to assess the legitimacy of abnormalities, faults, alarms, and/or warnings that may be raised by the substation-level validation function 120 or component-level functions 90, 100.

The supervisory function 110 may be operative to perform a monitoring 111 of alarms from the component-level functions 90, 100 and to assess whether an alarm is caused due to an abnormality in the component of the primary system (e.g., internal fault) or due to any issue with the secondary data acquisition system and/or the secondary system settings.

The supervisory function 110 may be operative to perform an identification 112 of faulty measurement channels of the secondary system (such as faulty instrumentation channels), if any. The supervisory function 110 may be operative to provide estimates for the faulty channels which may be used in the validation modules 100, 120. Various missing data replacement functions, such as hard imputation, correlations, etc. may be used to provide the estimates for the faulty channels.

The supervisory function 110 may be operative to perform the monitoring 111 and/or the identification 112 at protection timescales in order to maintain a reliable, dependable and secure protection system for the entire substation.

The assist function 130 may be operative to utilize a digital twin of the secondary system of the substation system (140) i.e., of the measurements instrumentation. The assist function 130 may be operative to provide correct settings and/or calibrating meters and to indicate if there is any physical issue (e.g., open circuit, short circuit connection) with a faulty instrumentation channel. To this end, the assist function 130 may use the redundant data available from various sources such as any one or any combination of: process bus, lEDs, disturbance recorders, SCADA, etc. The identification 131 of incorrect instrumentation settings and/or the determination 132 of correct instrumentation settings may be performed at a slower timescale (e.g., over seconds or minutes) that the processing of the modules 110, 120, as it relates to correction of the substation measurement instrumentation.

The component-level processing and/or that substation-level processing disclosed in detail herein may advantageously be used toward complement existing (e.g., a threshold-based) decision logics. The component-level processing and/or that substation-level processing disclosed in detail herein may advantageously be used in an electric power systems comprising a high penetration of renewables and/or comprising AC/DC, DC/AC, or DC/DC-converters; conventional protection and/or monitoring systems may not be adequate for such electric power system substations.

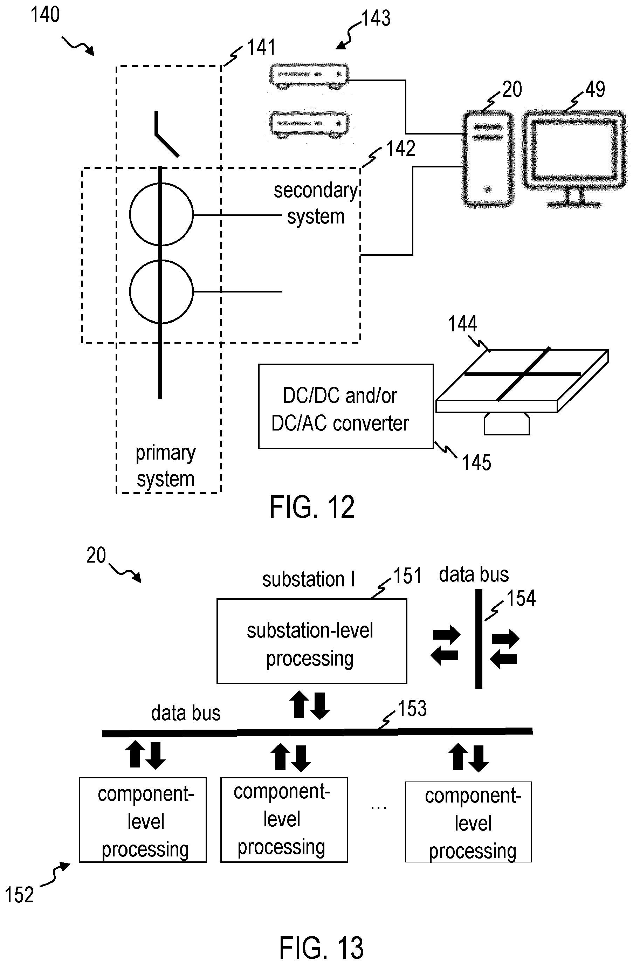

Figure 12 is a schematic representation of a substation 140 of an electric power system. The substation one hundred 40 comprises a primary system 141, a secondary system 142 that comprises the measurement instrumentation, and one or several protection and/or monitoring devices 143. The one or several protection and/or monitoring devices 143 may respectively employ conventional threshold-based decision logics.

The data processing system 20 according to the invention is provided in addition to and interfaced with the conventional protection and/or monitoring devices 143. The data processing system 20 may thereby add a further layer of safety in identifying abnormalities or faults, distinguishing abnormalities or faults in the primary system 141 from incorrect measurement instrumentation or incorrect measurement instrumentation settings, and/or preventing unnecessary down times.

As shown in Figure 12, the electric power system may be an electric power system comprising renewable power generators 144 and one or several AC/DC, DC/AC, and/or DC/DC-converters 145.

The various processing components of the data processing system 20 may receive the data to be processed in various ways, e.g., from a data bus, a process bus, a SCADA system, or in other ways.

Figure 13 is a schematic block diagram representation of a data processing system 20. The data processing system 20 comprises a substation-level processing module 151 that uses substation-wide measurements. The data processing system 20 comprises component-level processing modules 152 that process measurements from the terminals of the respective component. Data may be exchanged in the substation via a data bus 153 or process bus. Data may be exchanged between the data processing systems 20 of different substations via a data bus 154, for example. Communication between different substations may be implemented in accordance with IEC TR 61850-90 (e.g., in accordance with IEC TR 61850-90-1, -2, and -3 as in force at the filing or priority date of this application).

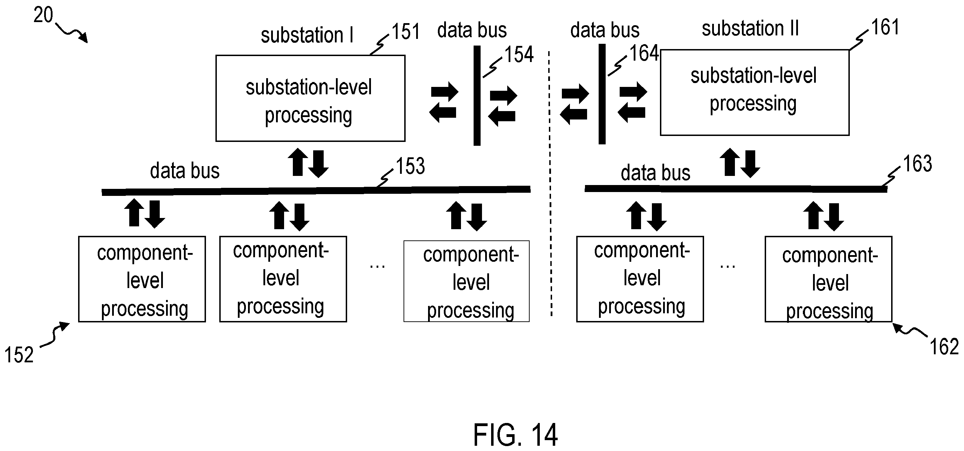

Figure 14 is a schematic block diagram representation of a data processing system 20 for a first substation, comprising a substation-level processing module 151 and component-level processing modules 152 that may exchange data via a data bus 153 or process bus. The system comprises a further substation-level processing module 161 and further component-level processing modules 162 for another substation, which may exchange data via a further data bus 163 or process bus. The different substation-level processing modules 151, 161 may be operative to communicate with each other via, e.g., data buses 154, 164. Communication between the different substation-level processing modules 151, 161 may be implemented in accordance with IEC TR 61850-90 (e.g., in accordance with IEC TR 61850-90-1, -2, and -3 as in force at the filing or priority date of this application). The communication between the different substation-level processing modules 151, 161 may allow coordination for performing protection functions (such as distance protection functions) for lines extending between the different substations.

The data processing systems and methods disclosed herein provide an enhanced approach for monitoring, protection and control of substations in power systems, such as power systems comprising renewable integrated power systems. The data processing systems and methods are based on a model-driven concept. The data processing systems and methods are operative to support and complement conventional decision logics (such as conventional lEDs) or to operate as a standalone solution.

Various effects are provided by the data processing systems and methods. The data processing systems and methods are capable of providing additional intelligence to the protection/monitor system of the substation. The data processing systems and methods are capable of safeguarding the system against unseen errors in the instrumentation which might trigger false relay operations. The data processing system and method are also capable of maintaining validated models of substation components and calibrating the instrumentation on a regular basis while providing monitoring and protection functionalities as its primary function.

The data processing system functionalities may be operative to use centralized (e.g., process bus and station bus) substation-wide (phasor domain and time domain) data with various frame rates. Illustrative frame rates are 25 Hz, 1 kHz, 4.8 kHz, 14.4 kHz, without being limited thereto. The data processing systems and methods may utilize data redundancy to implement the disclosed functionalities. The communication of current, modern substations in combination with the processing implemented by the data processing system provide the desired functions.

While the data processing system 20 may be implemented as a substation-specific system, it need not physically be installed at or in the substation. For illustration, the data processing system 20 may be provided remotely from the substation to implement the processing disclosed in detail herein.

Various specific illustrative operations of the data processing system and method according to embodiments will be described next.

Figure 15 is a flow chart of a method 170. The method 170 may be performed automatically by the data processing system 20.

At process block 171, data from a secondary system of a substation are processed. Processing the measurements may comprise using a digital twin for perform a state assessment. Processing the measurements may comprise performing, using redundant information included in the received data, a check of the state assessment and/or otherwise supporting the state assessment.

At process block 172, fault or abnormality detection is performed. The fault or abnormality detection may be performed in addition to the processing of legacy protection and/or monitoring devices, such as legacy lEDs. Alternatively, the fault or abnormality detection may be performed as a standalone solution that does not require presence of legacy protection and/or monitoring devices. The fault or abnormality detection may comprise performing, using redundant information included in the received data, a check of the state assessment and/or otherwise supporting the state assessment. The fault or abnormality detection may comprise identifying a root cause for a discrepancy between measurements and modeling of a component of a primary system of the substation and station and/or of the primary system of the substation.

At process block 173, an action is performed responsive to a detected fault or abnormality. The action may comprise an output action (such as outputting an alarm of warning) or a control action. The control action may comprise a mitigating and/or corrective action that is operative to counteract the detected fault or abnormality.

Figure 16 is a flow chart of a method 175. The method 175 may be performed automatically by the data processing system 20. The method 175 may be performed to implement the fault or abnormality detection at process block 172.

At process block 176, measurements are compared to results obtained from at least one digital twin. The comparison may comprise determining a fit error between electric characteristics that are expected in accordance with the at least one digital twin, and the received measurements. The fit error may be detected as a function of time.

At process block 177, a discrepancy is detected. The discrepancy may be detected in a time-resolve manner, based on the fit error.

Figure 17 is a flow chart of a method 180. The method 180 may be performed automatically by the data processing system 20. The method 180 may be performed to implement the discrepancy detection at process block 277. The method 180 may be performed to check a state assessment that is based on measurement data.

At process block 181, measurement data are received. The measurement data may be or may comprise time domain data (e.g., time series measurements) and/or frequency domain data. The measurement data may comprise samples of electric characteristics such as voltage, current, and/or power in the time and/or frequency domain.

At process block 182, a fit error is determined. The fit error quantifies a difference between the measurement data and the expected behavior according to, e.g., the digital twin(s). The fit error may be determined as a function of time (e.g., as a function of sample time) and/or as a function of frequency. The fit error may be determined in accordance with a metric (e.g., a L2 or other L-metric) that quantifies the deviation of the measurements from the digital twin-based characteristics.

At process block 183, the fit error is detected. A threshold comparison may be performed on the fit error to detect an abnormality. Abnormality detection may trigger the outputting of an abnormality flag, which may be used by the data processing system 20 (e.g., by a supervisory and/or assist function) for performing or triggering specific processing operations (such as a residual analysis or several residual analyses).

Figure 18 is a flow chart of a method 185. The method 185 may be performed automatically by the data processing system 20. The method 185 may be performed to implement a root cause analysis. The method 185 may be performed selectively once an abnormality has been detected.

At process block 186, a residual analysis may be performed. The residual analysis may provide, for each one of a set of equation labels that are each associated with a measurement, a residual error. Each of the set of equation labels may be related to a specific, different measurement instrument in the secondary system.

At process block 187, the measurement(s) having the highest residual error may be identified. Thereby, possible root causes for an identified analysis may be identified.

Process blocks 186, 187 may be repeated for different scenarios, such as using different data sources. For illustration, data from a particular measurement instrument (e.g., a specific current transformer in the substation) may be discarded when repeating the residual analysis and its evaluation. Thereby, it may be determined whether that particular measurement instrument (e.g., a specific current transformer in the substation) or its settings are the root cause for the detected abnormality. Changes in residual errors obtained in different repeats of process blocks 186, 187 may be used to check whether, upon discarding an erroneous measurement channel, the residual errors fulfill an acceptability criterion (e.g., by all residual errors falling to below an acceptability threshold).

At process block 188, a supervisory function result may be provided based on the results of the residual analysis. For illustration, a switch or CB trip may be blocked based on the method 185 detecting that the identified abnormality is caused by an incorrect measurement instrument or its setting(s), rather than by a genuine problem in the primary system. For further illustration, a HMI may be controlled to inform an operator of the root cause of an abnormality, with the root cause being identified in the method 185.

Figure 19 is a block diagram of (at least part of) a processing system 30. The component-level digital twin validation 101 may determine a first fit error, using, e.g., method 180 of Figure 17. Based on the determined first fit error, the component-level digital twin validation 101 may provide an abnormality flag to the supervisory function 110.

The substation -level digital twin validation 121 may determine a second fit error, using, e.g., method 180 of Figure 17. Based on the determined second fit error, the substation-level digital twin validation 121 may provide one or several further abnormality flag(s) to the supervisory function 110. Several further abnormality flag(s) may be provided if an abnormality is detected, based on (i) all of the measurements available and (ii) only some of the measurements available. For illustration, modification instructions from the supervisory function 110 may cause the substation -level digital twin validation 121 to repeat the fit error determination while discarding some of the available measurements. An analysis can still be performed in a meaningful way, as the measurements include redundant measurements (from, e.g., different current transformers that measure the same current).

The supervisory function 110, which may operate at the substation level, may cause the substation -level digital twin validation 121 to repeat the fit error determination while discarding some of the available measurements. This may be done responsive to the abnormality flag(s) received from at least one of the digital twin validations 101, 121.

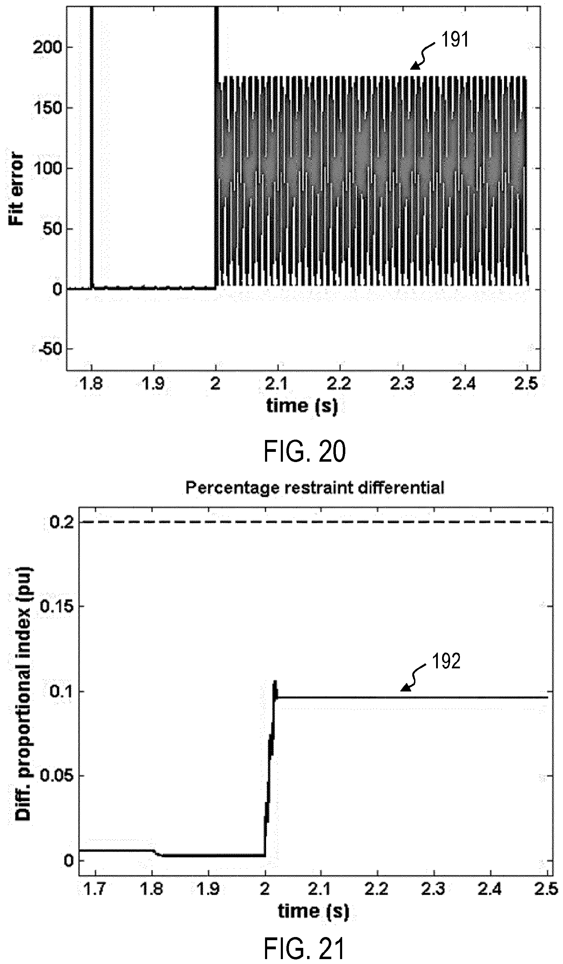

Figures 20 and 21 illustrate operation of the data processing system when detecting an incipient fault. The processing illustrated in Figure 20 (which shows a fit error 191 as determined by a component-level processing module) does not require substation-level processing.

As discussed in the disclosure, the component-level processing may comprise a component-level model validation function (such as the component-level model validation function 100) and a component-level assist function (such as the component-level assist function 90) which may be provided in addition to lEDs or other legacy protection and/or monitoring devices. The model-driven component-level model validation function with access to all the terminal measurements for the protected component/zone provides a protection/monitoring technique which may be complementary to the legacy lED functions. For example, the component-level model validation function may be able to detect incipient faults (Figure 20) such as a slowly developing insulation failure in a transformer winding by maintaining sensitive thresholds on the model-measurement fit errors 191. This provides a detection of faults or abnormalities even when the trigger threshold of the lED (Figure 21) is not reached by the signal 192 in the lED.

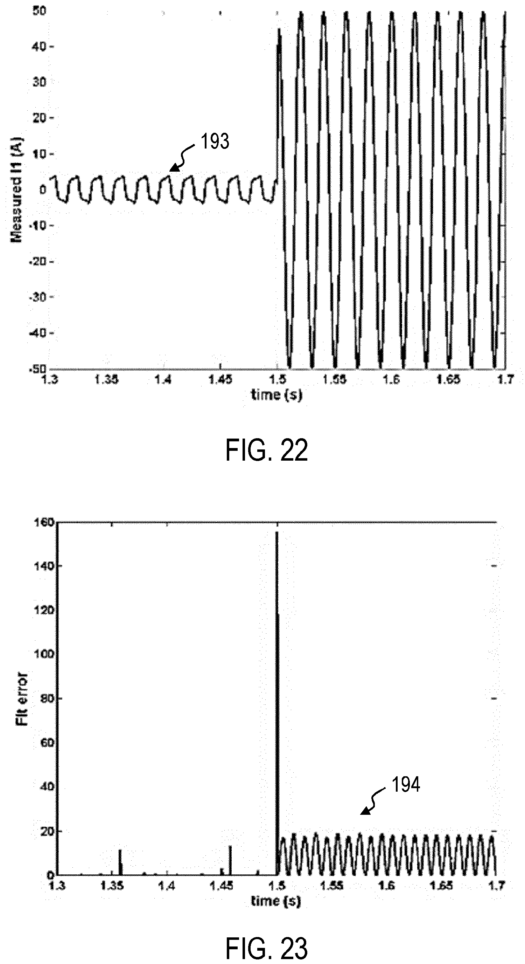

A model-based component-level model validation function may also be capable of tracking other abnormalities (which are not faults) such as magnetic saturation, core over excitation and magnetic inrush. Figure 22 illustrates a fit error 193 as seen by the component-level model validation function which allows the abnormality to be detected based on the deviation of expected (digital twin) and measured (data from secondary system) current drawn by a transformer during energization. Figure 23 illustrates fit errors 194 as seen by the data processing system 20, which are indicative of an abnormality or fault.

Other incident faults (such as incident failures of capacitor units in upper and lower legs of a capacitor bank) that go undetected by legacy lEDs can similarly be detected using the data processing system 20 and data processing method.

While the component-level model validation function may be operative to complement lED functionalities at a bay level, the proposed processing at component level and substation level may be operative to provide further enhanced protection, monitoring, and/or supervision in a substation.

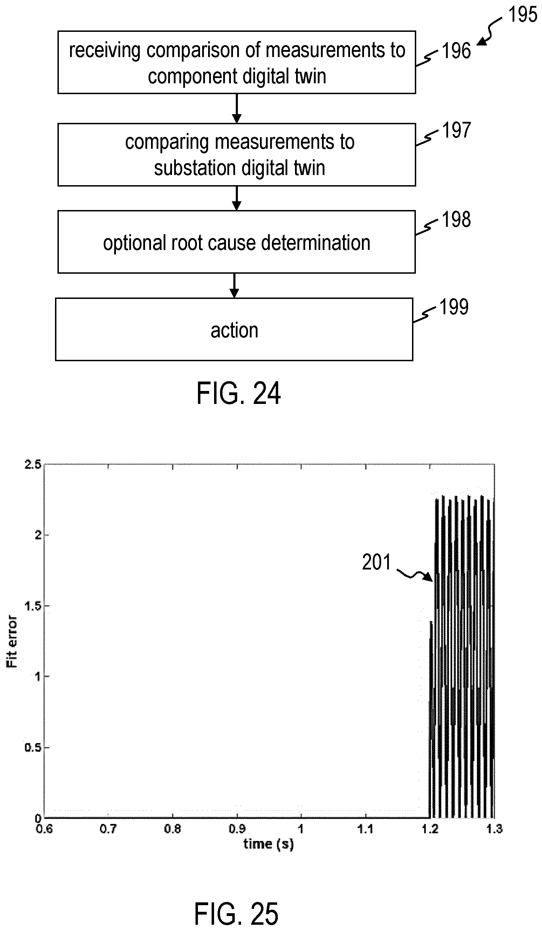

Figure 24 is a flow chart of a method 195. The method 195 may be performed automatically by the data processing system 20.

At process block 196, a substation-level processing module receives results of a comparison of component-level measurements (e.g., electric measurements at terminals of the component) to the expected characteristics determined based on the component-level digital twin. The comparison result may indicate an alarm as raised by the component-level processing.

At process block 197, substation-wide measurements are used in combination with the substation digital twin to check the alarm of the component-level processing. The substation-wide measurements may comprise redundant measurements that are leveraged to determine whether any alarm raised by the component-level processing is considered valid.

At process block 198, a root cause analysis may optionally be performed. The root cause analysis may determine whether an abnormality or fault identified by the component-level processing corresponds to an abnormality or fault in the primary system, is due to instrumentation errors, or has other reasons

At process block 199, an action is taken. The action may comprise an output action, corrective action, and/or mitigating action, without being limited thereto.

Operation of the data processing system using component-level and substation-level processing will be illustrated with reference to Figure 25 to Figure 34. For illustration and ease of understanding, two scenarios will be considered: one in which there is an internal component fault in phase 'a' and in the other there is a measurement error due to disconnection of CT secondary (Open CT condition) in phase 'a' for the current meter which measures the currents at the terminals of the apparatus. Such a current measurement (e.g., the current measurement of a current transformer CT1) can be the source both for the lED and the component-level model validation function at component level. At the substation level, an additional measurement is available for the currents of the component, and this measurement will be referred to as CT2.

### Case 1: Fault in phase 'a'

In this case, the component-level model validation function shows high model-measurement fit errors 201 (Figure 25) after the fault. An abnormality flag indicating an abnormality at the component level may be raised. An lED may also see the fault based on its own processing (not shown) and no auxiliary lED flag is raised (not shown). For the analysis presented here, dynamic state estimation and normalized residuals can be used for implementing the validation and supervisory functions. However, the disclosed techniques may be based on other processing techniques which can utilize digital twins and measurements for the same purpose.

If the component-level assist function simply uses intelligence from the IED, then no further steps will be implemented as no auxiliary lED flag is raised and the lED picks up the fault due to its own logic).

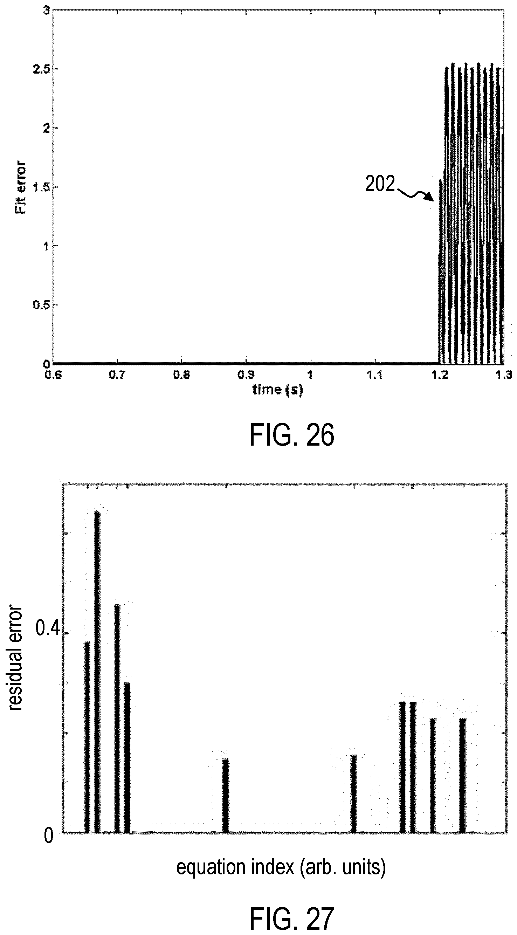

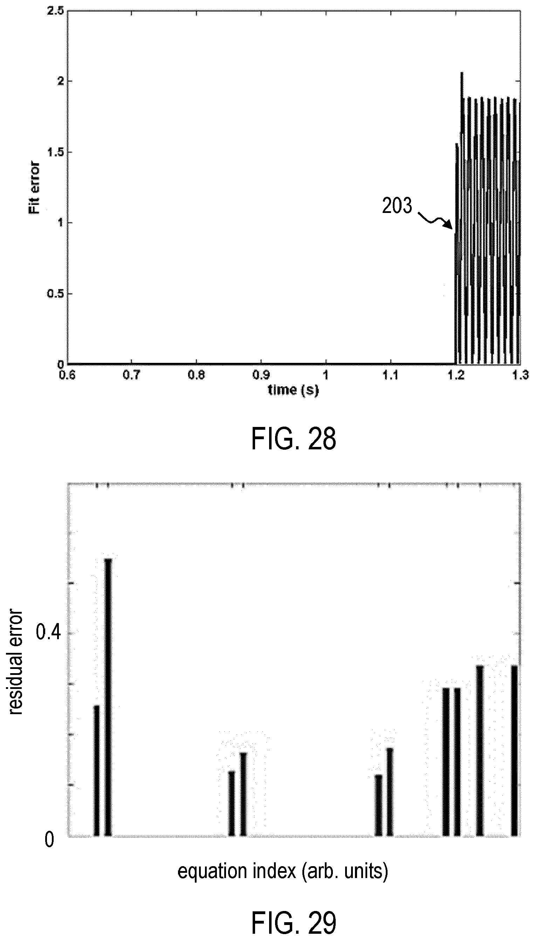

At the substation level, the substation-level model validation function also sees the fault due to high fit errors with substation-level model validation function 202 (Figure 26). The substation-level supervisory function will then take it further for the alarm legitimacy check. CT1a (i.e., current measurement from CT1 for phase a) is found to be the measurement with highest residual error. Exemplary results of the residual analysis are shown in Figure 27. The substation-level supervisory function then asks substation-level model validation function to implement its processing as before but without using the CT1a measurements. The data processing system observes that even without CT1a, substation-level model validation function fit errors 203 continue to remain high (Figure 28). Residual analysis done at this stage by the substation-level supervisory function (Figure 29) reveals CT2a to have high residual errors, which is indicative of the phase 'a' fault. Therefore, in this case, the substation-level module concludes that a fault is indeed present in phase 'a' in the primary system.

### Case 2: Open CT in phase 'a'

In this case, the component-level model validation function shows high model-measurement fit errors after the Open CT event and a component-level abnormality flag may be raised. The lED may also detect this condition, albeit with some delay. The Open CT flag in phase 'a' will be raised by the lED. Thus, the event is still inconclusive at the component level modules.

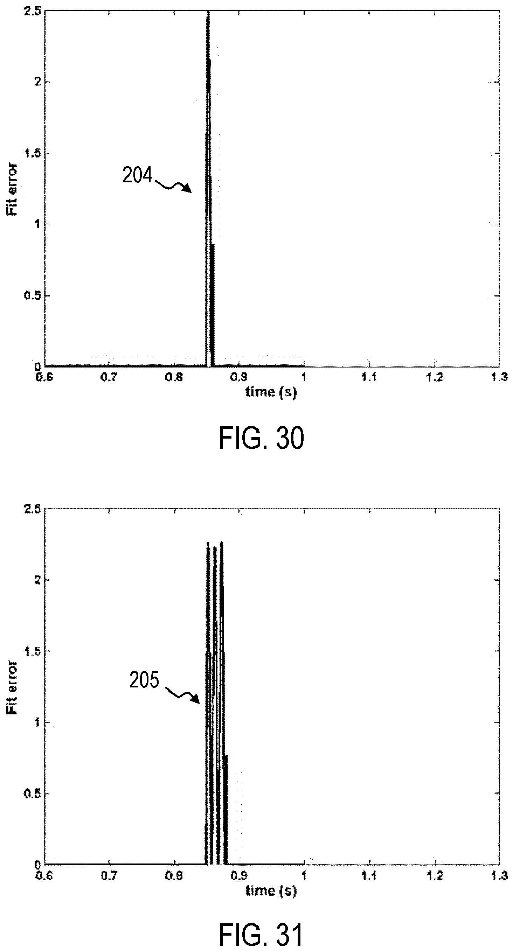

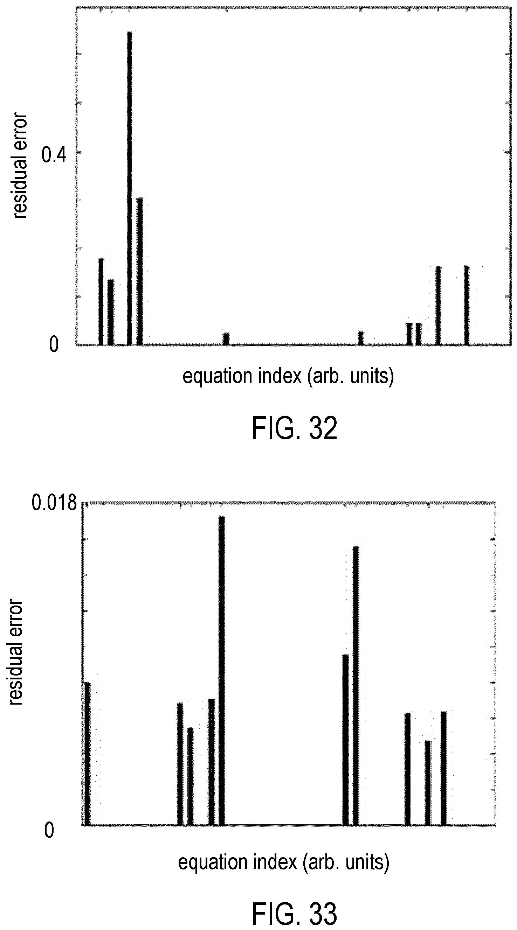

At the substation level, the substation-level model validation function also sees high fit errors with substation-level model validation function after the Open CT event. The substation-level supervisory function will then perform an alarm legitimacy check. CT1a is found to be the measurement with highest residual error (Figure 32). The substation-level supervisory function then causes the substation-level model validation function to implement its processing without using the CT1a measurement data. It is observed that without CT1a, substation-level model validation function fit errors 204 return to pre-event levels (Figure 30). Residual analysis done at this stage by the substation-level supervisory function (Figure 33) reveals no measurements with high residual errors, which is indicative of errors in measurement of phase 'a' current by CT1. This result can then be used along with the Open CT flag from the lED to avoid spurious operation of the protective relays.

The substation-level model validation function may also provide reliable estimates for CT1a based on the redundancy of information (measurements and model) as a byproduct. The substation-level supervisory function may be operative to use the outputs of substation-level supervisory function (e.g., a flag indicating that CT1a is having error) and substation-level model validation function (e.g., estimates for CT1a) and the extra measurement of phase 'a' current (i.e., the redundant measurement CT2a) to determine that indeed the root cause of this event is that CT1 is open circuited in phase 'a'.

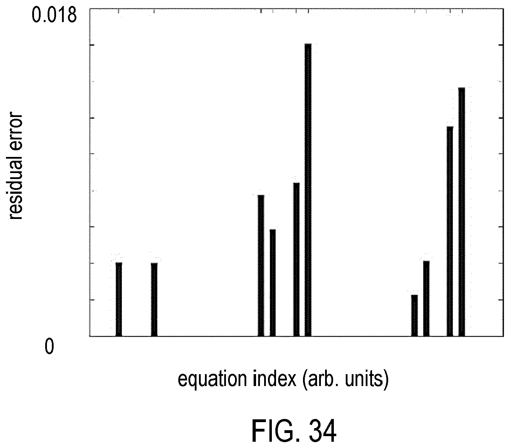

In the above description we assumed no action was taken by the component-level assist function. However, it is indeed possible to perform a local supervision of the component-level model validation function decision by means of the component-level assist function. Assuming, component-level assist function uses intelligence from the IED, i.e., in this case, the lED auxiliary flag Open CT, it may cause the component-level model validation function to implement the model-measurement fit by removing CT1a measurement from consideration. In that case, it is observed that the component-level model validation function fit errors 205 fall back to pre-event values (Figure 31) and it can be concluded at the component level itself that this is not a case of fault within the apparatus, but a case of erroneous measurement. This is also confirmed by the residual analysis which may be performed at the component level processing or at the substation level processing (Figure 34). Additionally, this component level decision will be corroborated at the substation level modules as described above.

Note that, this component-level assist function implementation is based solely depending upon lED auxiliary flags. In case the lED was not able to detect the Open CT condition, then the component level would have concluded this event as a fault. This illustrates the additional effect obtained by performing a check at the substation level. Moreover, it may not always be feasible to perform a correction at the component level by removing measurements from the validation step, as removal of measurements may lead to a situation of mathematically under-determined system. The level of measurement redundancy available at component level may be limited in comparison to that at the substation level.

Alternatively or additionally to the above implementation, the component-level assist function may be implemented independent of the lED based on, e.g., domain expert knowledge or ML or processing techniques such as residual analysis (in a similar manner as described for the substation-level supervisory function above) respecting the limited component level information.

Under Open CT condition (or any other similar condition when issues with measurements exist and are identified), the lED is blocked until the condition is reversed which may take time. Any fault in the component during this period will go undetected by the lED.

Thus, the data processing system 20 and data processing method provide the additional bonus effect that CT2 can be considered as the source for current measurements until CT1 is fixed. Thereby, any faults during the period the lED is blocked can still be detected by the component-level model validation function. Moreover, the data processing system may be operative such that the lED may be configured to CT2 if it is not hardwired to CT1. Thereby, responsiveness to faults is improved during the period when CT1 is not available as a source.

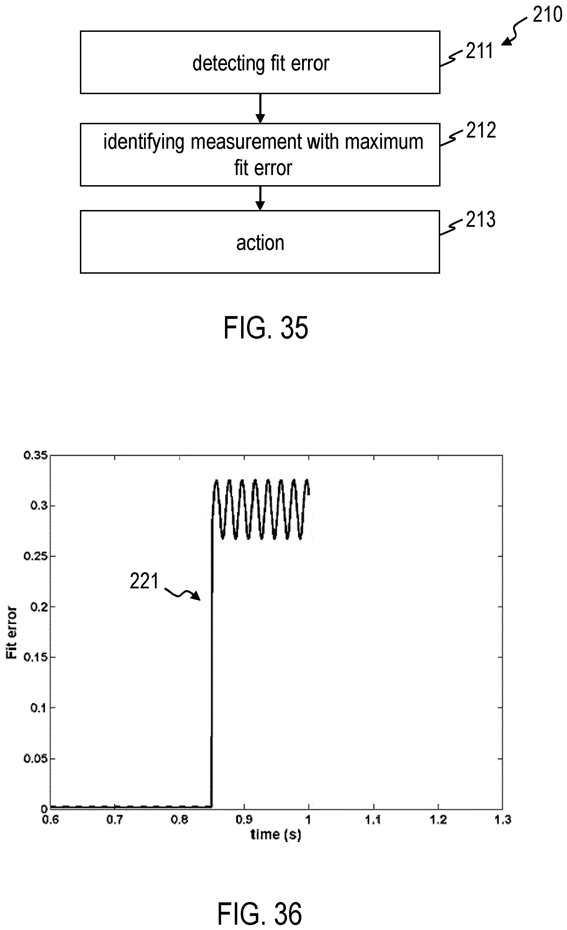

Figure 35 is a flow chart of a method 210. The method 210 may be performed automatically by the data processing system 20.

At process block 211, a fit error between measurements and model-based expectations is detected.

At process block 212, a measurement having maximum fit error is identified. The fit error may be determined using any metric that quantifies a discrepancy between a time-dependent measurement (of, e.g., voltage, current, and/or other electric characteristics) and the expected time-dependent characteristics computed using the modeling approach of the digital twin(s).

At process block 213, an action is taken based on which of the measurements has maximum fit error. The action may comprise an output action, corrective action, and/or mitigating action, without being limited thereto.

Operation of the method will be illustrated with reference to Figure 36, Figure 37, Figure 38, Figure 39, and Figure 40.

For illustration, it is assumed that an lED configured to a current measurement (referred to as CT1) is set incorrectly. The incorrect CT ratio setting may be the result of a human error. The component-level model validation function feeds from CT1, but the component-level model validation function is set correctly to read from CT1. In this case, when the component is energized to carry current, the lED picks up. There is no other lED auxiliary flag as there is no issue with the measurements. The component-level model validation function however shows no fit errors. Therefore, there is a conflict at the component level as to what is the exact nature of the event. This illustrates that different root causes can be identified using the techniques disclosed herein.

For further illustration, another scenario is considered in which the lED and component-level model validation function are configured to CT1. The CT ratio setting for CT1 is incorrectly recorded by the relay engineer and therefore both lED and component-level model validation function are set incorrectly for the input from CT1. In this case, as soon as the component is energized to carry current, the lED spuriously picks up. There is no lED auxiliary flag as there is no issue with the measurements. The component-level model validation function also shows high fit error (Figure 36), consistently indicating a fault in the primary system. The component level modules conclude a fault.

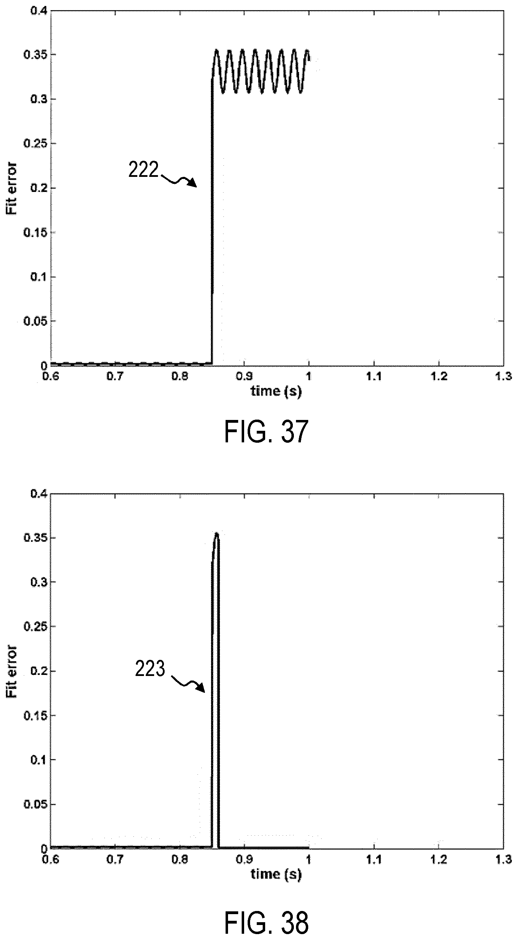

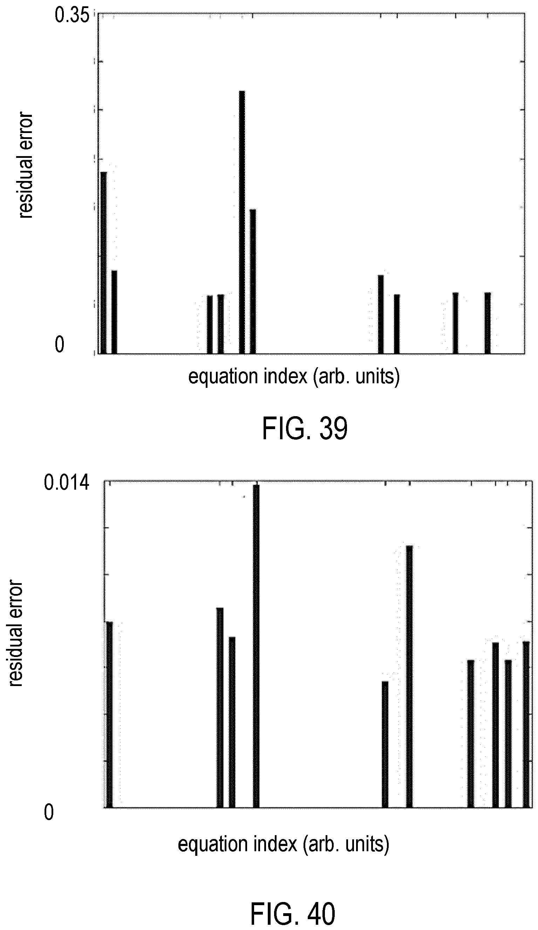

As mentioned earlier, the substation level modules on the other hand have an additional measurement instrument, referred to as CT2, for the currents through the components. The substation-level model validation function implementation is based on both CT1 and CT2. Therefore, substation-level model validation function also shows high fit errors (Figure 37). Residual error analysis at the substation-level supervisory function (Figure 39) reveals all current measurements associated with CT1 to have high errors. The substation-level model validation function may then be caused to implement its processing in a manner in which CT1 measurements are removed. It is observed that with CT1 removed from consideration, substation-level model validation function fit errors fall back to pre-event values (Figure 38), thus indicating that the event is triggered due to erroneous measurements in CT1. The residual errors fall to acceptable levels (Figure 40).

At the substation-level assist function, outputs of substation-level supervisory function (flag indicating CT1 as erroneous), substation-level model validation function (estimates for CT1) and the redundant measurement CT2 may be utilized to infer that indeed CT1 is wrongly scaled over all the three phases with respect to the actual values of the phase currents. This indicates that the hidden failure is a wrong CT ratio setting.

Various effects and advantages are attained by the data processing system and method according to embodiments. The data processing systems and methods provide enhanced techniques of detecting abnormalities and/or faults. The data processing systems and methods can be used to complement existing protection and/or monitoring systems with devices capable of reducing possible errors made by a human engineer during protection system configuration and/or commissioning. The data processing systems and methods can be used to provide enhanced fault or abnormality in view of higher penetration of renewables, incorrect instrumentation, or other unseen errors in the data acquisition systems.

While embodiments have been described with reference to the drawings, modifications and alterations may be implemented in other embodiments.

For illustration, while embodiments have been described in which the substation is an electric power system substation, the devices, systems, and methods may be used in association with substations of other industrial and/or utility systems, e.g., as part of an industrial automation and control (IACS) system.

While embodiments have been described in which substation-level processing based on substation-wide measurements is combined with a supervisory and/or assist function at the component level, the techniques may also provide benefits when used alone.

While embodiments have been described in which dynamic state estimation and normalized residuals can be used for implementing the validation and supervisory functions, the disclosed techniques may utilize other processing techniques which can utilize digital twins and measurements for the same purpose.

Embodiments may be used in association with substations of an electric power grid, such as a medium or high voltage grid. Embodiments may be used in association with electric power generation, transmission, and/or distribution systems, including renewable energy systems (such as DERs).

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A data processing system (20) for a substation system (10; 140), wherein the substation system (10; 140) comprises a primary system (141) and a secondary system (11, 12; 43, 44; 142), the primary system (141) comprising a plurality of primary system components (13), the data processing system (20) comprising:
at least one interface (21) operative to receive data acquired or generated by the secondary system (11, 12; 43, 44; 142) and relating to the primary system (141); and
at least one processing circuit (30) operative to
perform, continually and during field operation of the primary system (141), a state assessment of at least one primary system component of the plurality of primary system components or of the primary system (141) of the substation system (140) based on the received data and at least one digital twin (31; 61-64), and
execute at least one function (32; 65-68) that performs a check of or supports the state assessment based on one or several of: redundant information (73) included in the received data, domain knowledge data (74), and/or a trained machine learning, ML, model.

2. The data processing system (20) of claim 1,
wherein the at least one digital twin comprises a plurality of first digital twins (65-67), each of the plurality of first digital twins (65-67) modeling an associated one of the plurality of primary system components.

3. The data processing system (20) of claim 2,
wherein the at least one function comprises a plurality of first component-level functions (65-67), optionally wherein each of the first component-level functions (65-67) is operative
to cause, based on the check, an adjustment of a process executed based on a first digital twin to perform the state assessment and/or
to supervise the state assessment based on domain knowledge and/or a trained machine learning, ML, model.

4. The data processing system (20) of claim 3,
wherein the adjustment comprises discarding part of the data as being unreliable when performing the state assessment.

5. The data processing system (20) of any one of the preceding claims,
wherein the at least one digital twin comprises a second digital twin (64) that models at least the primary system (141).

6. The data processing system (20) of claim 5 when dependent on any one of claims 2 to 4,
wherein the second digital twin (64) is operative to receive output generated by the plurality of first digital twins.

7. The data processing system (20) of claim 5 or claim 6,
wherein the second digital twin is operative to receive and process the redundant information included in the data, optionally wherein the redundant information comprises redundant measurements (73) and/or optionally wherein the redundant information comprises at least two measurements of a same substation parameter acquired or generated by different measurement instruments of the secondary system (11, 12; 43, 44; 142), further optionally wherein the at least one processing circuit (30) is operative to perform, based on the second digital twin (64), a substation state assessment.

8. The data processing system (20) of any one of the preceding claims,
wherein the at least one digital twin comprises a third digital twin (69) that models at least the secondary system (11, 12; 43, 44; 142).

9. The data processing system (20) of any one of the preceding claims,
wherein the at least one processing circuit (30) is operative to identify, based on the check, instrumentation errors in the secondary system (11, 12; 43, 44; 142).

10. The data processing system (20) of any one of the preceding claims,
wherein the processing circuit (30) is operative to identify, based on the check, a root cause for a discrepancy between the data and the at least one digital twin (31).

11. The data processing system (20) of claim 10,
wherein the at least one processing circuit (30) is operative to distinguish, based at least on the redundant information (73), root causes selected from a group consisting of: an abnormality of at least one primary system component of the primary system (141); unsuitability of a model or model parameterization of the at least one digital twin; an abnormality of a measurement instrumentation (11, 12; 43, 44).

12. The data processing system (20) of any one of the preceding claims,
wherein the at least one interface (21) is operative to receive an lED logic output from at least one lED (143) of the substation system (140) and
wherein the at least one processing circuit (30) is operative to check the lED logic output based on the at least one digital twin (31) and the received data,
optionally wherein the at least one interface (21) is further operative to receive and process auxiliary data indicative of data issues.

13. The data processing system (20) of any one of the preceding claims,
wherein the at least one processing circuit (30) is operative to trigger at least one action based on the check, optionally wherein the at least one action comprises one or several of an output action via a human machine interface (49), HMI, a corrective action, a mitigating action, further optionally wherein the at least one action comprises a corrective or mitigating action that affects an electric power system protection function and/or an electric power system monitoring function.

14. An electric power system substation, comprising:
a primary system (141) comprising a plurality of primary system components,
a secondary system (11, 12; 43, 44; 142) operative to acquire or generate data relating to the primary system (141), and
the data processing system (20) of any one of the preceding claims operative to receive and process the acquired or generated data.

15. A data processing method for a substation system (10; 140), wherein the substation system (10; 140) comprises a primary system (141) and a secondary system (11, 12; 43, 44; 142), the primary system (141) comprising a plurality of primary system components, the data processing method comprising:
receiving data acquired or generated by the secondary system (11, 12; 43, 44; 142) and relating to the primary system (141); and
performing, continually and during field operation of the primary system (141), a state assessment of at least one primary system component of the plurality of primary system components or of the primary system of the substation system (140) based on the received data and at least one digital twin (31), and
executing at least one function that performs a check of or supports the state assessment based on at least one of: redundant information (73) included in the received data, domain knowledge (74), and/or a trained machine learning, ML, model.
